# EUROPÄISCHE PATENTSCHRIFT

(11) **EP 2 524 895 B1**
(45) Veröffentlichungstag und Bekanntmachung des Hinweises auf die Patenterteilung: **21.08.2013**
(21) Anmeldenummer: 11004214.0
(22) Anmeldetag: 20.05.2011
(51) Int. Cl.: B68G 9/00

(54) **Vorrichtung und Verfahren zum Fördern einer Federschlange**
Method and device for conveying a string of pocketed spring
Dispositif et procédé destinés au transport d'une serie de ressorts

(43) Veröffentlichungstag der Anmeldung: 21.11.2012
(73) Patentinhaber: Spühl AG, 9300 Wittenbach (CH)
(72) Erfinder: Hug, Christopher, 9000 St. Gallen (CH); Meier, Andreas, 9032 Engelburg (CH)
(74) Vertreter: Banzer, Hans-Jörg

(56) Entgegenhaltungen:
- WO-A1-02/092495

## Beschreibung

Die Erfindung betrifft eine Vorrichtung und ein Verfahren zum Fördern einer Federschlange. Die Erfindung betrifft insbesondere eine Vorrichtung und ein Verfahren, mit der bzw. mit dem eine Taschenfederschlange zu einer Federkern-Montageeinrichtung gefördert werden kann.

Zur Herstellung von Federnkernen oder Taschenfederkernen werden Maschinen oder Automaten eingesetzt, mit denen ein hoher Grad an Automatisierung bei der Herstellung von Federreihen, Taschenfederschlangen, Federkernen oder Taschenfederkernen erreichbar ist. Derartige Maschinen oder Automaten können einen Federformer zum Herstellen von Federn sowie mehrere diesem nachgeordnete Stationen aufweisen, in denen die Federn beispielsweise selektiv gedreht, in Reihen angeordnet, eingetascht, zu einer Federkern-Montageeinrichtung gefördert und zu einem Federkern oder Taschenfederkern zusammengefügt werden können.

Federkerne umfassen üblicherweise eine bestimmte Anzahl von nebeneinander angeordneten und miteinander verbundenen Federreihen aus einer Vielzahl von in Linie angeordneten und miteinander verbundenen Federn. Für qualitativ hochstehende Federkerne können die Federn in Taschen angeordnet sein, die miteinander verbunden sind. Dazu können Federn der Federreihe in einen Schlauch aus thermoplastischem Material in voneinander getrennte Taschen eingeschweißt werden. Die WO 96/27553 und die EP 0 624 545 A1 beschreiben Anlagen, mit denen eine Federschlange mit einer vorgegebenen Anzahl von Federn automatisch erzeugt und gefördert werden kann.

Herkömmliche Anlagen erlauben häufig nicht, Variationen in Längen von Federschlangen auszugleichen. Solche Längenabweichungen können bei der automatischen Kombination mehrerer Federschlangen in einer Federkern-Montageeinrichtung zu Problemen führen und/oder zu unerwünschten Abweichungen der Abmessungen von hergestellten Federkernen von Soll-Werten führen.

Die WO 02/092495 A1 beschreibt Verfahren und Vorrichtungen, die eine Anpassung einer Länge einer Federschlange ermöglicht, um so Abweichungen von einem SollWert zumindest in einem gewissen Umfang ausgleichen zu können. Zum Ausgleichen von derartigen Längenabweichungen ist vorgesehen, dass zunächst in Federschlangen-Abschnitt von einer Endlosschlange abgetrennt und der gesamte Federschlangen-Abschnitt, d.h. der Teil, der zuvor als Einheit von einer Endlos-Federschlange abgetrennt wurde, in einem Transportbereich positioniert wird. In dem Transportbereich wird die Ist-Gesamtlänge des Federschlangen-Abschnitts ermittelt. Abhängig von einem Vergleich zwischen der Ist-Gesamtlänge und einer Soll-Länge wird eine Geschwindigkeit von Transportbändern in einem nachgeordneten Transferbereich eingestellt, um die Federschlangen-Abschnitt auf die Soll-Länge zu bringen. Diese Vorrichtungen und Verfahren erlauben es, unerwünschte Längenvariationen auszugleichen, bevor eine Montage zu einem Federkern erfolgt. Der Transportbereich muss jedoch so dimensioniert sein, dass er den gesamten Federschlangen-Abschnitt aufnehmen kann. Dies kann im Hinblick auf Bauraumerfordernisse und Arbeitsgeschwindigkeit unerwünscht sein.

Es besteht ein Bedarf an einer verbesserten Vorrichtung und einem verbesserten Verfahren zum Fördern von Federn zu einer Federkern-Montageeinrichtung. Insbesondere besteht ein Bedarf an einer derartigen Vorrichtung und einem derartigen Verfahren, die bzw. das es erlaubt, Längenvariationen vor einer Montage von Federschlangen zu einem Federkern auszugleichen. Es besteht weiterhin ein Bedarf an einer derartigen Vorrichtung und einem derartigen Verfahren, die bzw. das es erlaubt, einen derartigen Ausgleich von Längenvariationen mit geringeren Bauraumerfordernissen und/oder höherer Arbeitsgeschwindigkeit auszuführen.

Erfindungsgemäß wird eine Vorrichtung und ein Verfahren angegeben, wie sie in den unabhängigen Ansprüchen definiert sind. Die abhängigen Ansprüche definieren vorteilhafte oder bevorzugte Ausführungsbeispiele.

Die Vorrichtung und das Verfahren erlauben es, Längenvariationen in der Länge einer Federschlange, die mehrere miteinander verbundene eingetaschte Federn beinhaltet, auszugleichen, während die Federschlange zu einer Federkern-Montageeinrichtung transportiert wird.

Nach einem Aspekt wird eine Vorrichtung zum Fördern einer Federschlange, die eine Mehrzahl von miteinander verbundenen eingetaschten Federn aufweist, angegeben. Die Vorrichtung umfasst einen ersten Federförderer, einen diesem in Förderrichtung nachgeordneten zweiten Federförderer, eine Sensoreinrichtung und eine Steuereinrichtung. Die Sensoreinrichtung ist eingerichtet, um Längen mehrerer voneinander verschiedener Segmente der Federschlange zu erfassen, während die Federschlange an einem in Förderrichtung vor dem zweiten Federförderer angeordneten Sensor der Sensoreinrichtung vorbeigeführt wird. Die Steuereinrichtung ist mit der Sensoreinrichtung und mit einem Antrieb wenigstens eines der Federförderer gekoppelt. Die Steuereinrichtung ist eingerichtet, um in einem Betriebszustand der Vorrichtung, in dem sowohl der erste Federförderer als auch der zweite Federförderer die Federschlange fördert, abhängig von den erfassten Längen zeitsequentiell mehrere Relativ-Fördergeschwindigkeiten zwischen einer Fördergeschwindigkeit des zweiten Federförderers und einer Fördergeschwindigkeit des ersten Federförderers einzustellen.

Bei der Vorrichtung dienen Längen von Segmenten der Federschlange als Basis für eine Einstellung der mehreren Relativ-Fördergeschwindigkeiten. Dadurch ist es nicht mehr nötig, eine Pufferzone vorzusehen, in der die gesamte Federschlange positioniert und vermessen werden kann, um anschließend automatisch eine Längenkorrektur vorzunehmen. Der für die Vorrichtung benötigte Bauraum kann so verringert werden. Die Zeit, die zum Fördern der Federschlange zu einer Federkern-Montageeinrichtung erforderlich ist, kann entsprechend verringert werden. Durch die segmentweise Längenbestimmung kann auch eine segmentweise Längenkorrektur durchgeführt werden. Dadurch können besonders gleichmäßige Federabstände erreicht werden, wenn die Federschlange vollständig an dem zweiten Federförderer positioniert und für einen Transfer zu einer Federkern-Montageeinrichtung bereit ist.

Die mehreren Relativ-Fördergeschwindigkeiten können abhängig von einem Vergleich der für die verschiedenen Segmente ermittelten Längen mit jeweils einer Soll-Länge ermittelt werden.

Zum Einstellen der Relativ-Fördergeschwindigkeit kann ein Geschwindigkeitsverhältnis der Fördergeschwindigkeit des zweiten Federförderers zu der Fördergeschwindigkeit des ersten Federförderers eingestellt werden. Die Einstellung kann jeweils überprüft und, falls erforderlich, angepasst werden, wenn ein neues Segment, dessen Länge vorher bestimmt wurde, den Übergang vom ersten Federförderer zum zweiten Federförderer erreicht.

Die unterschiedlichen Segmente können miteinander überlappen. Die unterschiedlichen Segmente können jeweils eine andere Anzahl von Federn umfassen. Beispielsweise kann sich ein erstes Segment von einer in Förderrichtung vordersten Feder bis zu einer Nₛ₀-ten Feder der Federschlange erstrecken, wobei Nₛ₀ eine ganze Zahl ist, die der Anzahl der Federn im ersten Segment entspricht. Die weiteren Segmente können sich von der vordersten Feder bis zu einer (Nₛ₀+k)-ten Feder der Federschlange erstrecken, wobei 1 ≤ k ≤ N-Nₛ₀ eine ganze Zahl und N die Gesamtzahl von Federn in der Federschlange ist.

Die Steuereinrichtung kann so ausgestaltet sein, dass sie durch einen Vergleich der für das erste Segment bestimmten Länge mit der Soll-Länge für dieses Segment eine anfängliche Relativ-Fördergeschwindigkeit bestimmt. Die Steuereinrichtung kann weiterhin so ausgestaltet sein, dass sie die anfängliche Relativ-Fördergeschwindigkeit abhängig von einem Vergleich der für die weiteren Segmente bestimmten Längen mit den entsprechenden Soll-Längen anpasst. Auf diese Weise kann die Relativ-Fördergeschwindigkeit einjustiert werden.

Bei einer weiteren Ausgestaltung können die Sensoreinrichtung und die Steuereinrichtung so ausgebildet sein, dass jedes der Segmente eine vorgegebene Anzahl von Federn aufweisen kann. Wenn eine Federschlange an den ersten Federförderer übergeben wird, kann mit dem Sensor diese Anzahl von Federn abgezählt und dabei der Vorschub bestimmt werden, den der erste Federförderer benötigt, um diese Anzahl von Federn an dem Sensor vorbeizuführen. Dieser Wert entspricht der Länge des Segments mit der Anzahl von Federn. Bevor eine in Förderrichtung vorderste Feder der Federschlange zu dem zweiten Federförderer überführt wird, wird der zweite Federförderer gestartet. Die Fördergeschwindigkeit des zweiten Federförderers wird dabei anfangs abhängig von der für das in Förderrichtung vorderste Segment der Federschlange gewählt. Während der weiteren Bewegung der Federschlange werden die Längen zusätzlicher Segmente ermittelt. Die Fördergeschwindigkeit des zweiten Federförderers kann entsprechend angepasst werden, wenn das entsprechende Segment den Übergang vom ersten Federförderer zum zweiten Federförderer erreicht.

Die Steuereinrichtung kann eingerichtet sein, um abhängig von den erfassten Längen und den eingestellten Relativ-Fördergeschwindigkeiten rechnerisch Positionen von mehreren Federn der Federschlange an dem zweiten Federförderer zu ermitteln. Die Steuereinrichtung kann eingerichtet sein, um so die Positionen aller Federn der Federschlange an dem zweiten Federförderer zu ermitteln. Diese Informationen können zur Steuerung der Federkern-Montageeinrichtung verwendet werden. Beispielsweise können abhängig von den so ermittelten Positionen Klebstoffpunkte oder Klebstofflinien, die zum Zusammenfügen von Federschlangen auf eine der Federschlangen aufgebracht werden, ermittelt werden. Eine Klebstoffdüse kann abhängig von den Positionen gesteuert werden.

Die Vorrichtung kann weiterhin eine Abtrenneinrichtung zum Abtrennen der Federschlange von einer Endlos-Federschlange umfassen. Die Steuereinrichtung kann mit der Abtrenneinrichtung gekoppelt und eingerichtet sein, um wenigstens eine der mehreren Relativ-Fördergeschwindigkeiten einzustellen, bevor sie die Abtrenneinrichtung ansteuert, um die Federschlange von der Endlos-Federschlange abzutrennen. Auf diese Weise kann ein Ausgleich von Längenvariationen bereits begonnen werden, bevor die Federschlange von der Endlos-Federschlange abgetrennt wird.

Die Abtrenneinrichtung kann eine Schweißeinrichtung zum Anbringen einer Schweißung an einem Ende der abgetrennten Federschlange aufweisen. Die Abtrenneinrichtung kann so eingerichtet sein, dass sie eine Schweißnaht am Ende der abgetrennten Federschlange formt.

Die Vorrichtung kann eine Überführungseinrichtung zum Überführen der Federschlange zu dem ersten Federförderer umfassen. Die Überführungseinrichtung kann in der Förderrichtung bewegbar gelagert sein und abhängig von einem Steuersignal der Steuereinrichtung aus einem Haltezustand zum Halten der Federschlange in einen Freigabezustand zum Freigeben der Federschlange überführbar sein. Die Steuereinrichtung kann eingerichtet sein, um das Steuersignal, mit dem die Freigabe der Federschlange bewirkt wird, abhängig von einem Vergleich der Fördergeschwindigkeit des ersten Federförderers und einer Bewegungsgeschwindigkeit der Überführungseinrichtung in der Förderrichtung zu erzeugen. Auf diese Weise kann ein Schlupf zwischen dem ersten Federförderer und dem zu ihm überführten Kopfende der Federschlange verringert werden.

Der erste Federförderer kann wenigstens zwei quer zur Förderrichtung voneinander beabstandete Fördereinrichtungen aufweisen. Die Fördereinrichtungen können jeweils als umlaufende Förderbänder ausgebildet sein. Die Überführungseinrichtung kann ausgestaltet und angeordnet sein, um in einen Spalt zwischen den quer zur Förderrichtung beabstandeten Fördereinrichtungen einzufahren. Dadurch kann ein Schlupf bei der Überführung an den ersten Federförderer reduziert werden.

Der erste Federförderer kann zwei Paare von in einer ersten Richtung quer zur Förderrichtung voneinander beabstandeten Fördereinrichtungen aufweisen. Die Fördereinrichtungen können jeweils als umlaufende Förderbänder ausgebildet sein. Die Paare können in einer zweiten Richtung senkrecht zur Förderrichtung, die senkrecht zur ersten Richtung ist, voneinander beabstandet sein. Durch eine derartige Ausgestaltung kann eine sichere und schlupfarme Überführung an den ersten Federförderer erreicht werden.

Die Steuereinrichtung kann eingerichtet sein, um das Steuersignal zu erzeugen, wenn eine Differenz zwischen der Fördergeschwindigkeit des ersten Federförderers und der Bewegungsgeschwindigkeit der Überführungseinrichtung einen Betrag aufweist, der kleiner als ein vorgegebener Schwellenwert ist. Auf diese Weise kann ein Schlupf zwischen dem ersten Federförderer und dem zu ihm überführten Kopfende der Federschlange verringert werden. Der Sensor, der zum Erfassen der Länge der mehreren Segmente eingesetzt wird, kann in Förderrichtung vor dem ersten Federförderer vorgesehen sein. Durch die Verringerung des Schlupfes zwischen Federschlange und erstem Federförderer liefert auch ein derart angeordneter Sensor zuverlässige Werte für eine Länge der Segmente an dem ersten Federförderer.

Der Sensor, dessen Ausgangssignal zum Ermitteln der Längen der Segmente verwendet wird, kann in Förderrichtung nach einem Einlaufbereich des ersten Federförderers und vor einem Auslaufbereich des ersten Federförderers angeordnet sein.

Die Sensoreinrichtung kann einen in Förderrichtung vor dem ersten Federförderer angeordneten weiteren Sensor zum Erfassen der Längen der mehreren Segmente umfassen, wobei die Steuereinrichtung eingerichtet sein kann, um die mehreren Relativ-Fördergeschwindigkeiten weiterhin abhängig von einem Ausgangssignal des weiteren Sensors einzustellen. So können die Signale mehrerer in Förderrichtung beabstandeter Sensoren miteinander kombiniert werden, um die Genauigkeit bei der Bestimmung der Längen der Segmente zu erhöhen. Alternativ kann auf den am ersten Federförderer vorgesehenen Sensor verzichtet werden. Falls sowohl der Sensor am ersten Federförderer als auch der weitere Sensor vor dem ersten Federförderer vorhanden ist, kann der weitere Sensor eingesetzt werden, um Federn und Nähte zwischen eingetaschten Federn zu zählen. Der weitere Sensor kann vor der Abschneidevorrichtung angeordnet sein.

Der erste Federförderer kann eine Länge in Förderrichtung aufweisen, die kleiner als eine Länge der Federschlange an dem ersten Federförderer ist. D.h. der erste Federförderer kann so bemessen sein, dass nicht die gesamte Federschlange auf ihm positioniert werden kann. Als "Länge der Federschlange an dem ersten Federförderer" wird dabei die Länge bezeichnet, um die der erste Federförderer die Federschlange vorschieben muss, bis die gesamte Federschlange einen vorgegebenen Punkt an dem ersten Federförderer passiert hat.

Der erste Federförderer kann einen Stellantrieb aufweisen. Die Steuereinrichtung kann eingerichtet sein, um zum Ermitteln der Längen der Segmente abhängig von einem Ausgangssignal des Sensors Stellungen des Stellantriebs abzufragen. Auf diese Weise kann durch Kombination eines relativ einfachen Sensors, beispielsweise eines Distanzsensors, mit Information, die durch den Stellantrieb bereitgestellt wird, die Segmentlänge ermittelt werden.

Die Sensoreinrichtung kann wenigstens zwei in einer Richtung quer zur Förderrichtung beabstandete Sensoren aufweisen, um eine Verkippung einer Feder der Federschlange zu detektieren. Die zwei Sensoren können in beiden Richtungen, die quer zur Förderrichtung sind, zueinander versetzt sein. Der zweite Federförderer kann wenigstens zwei Stellantriebe aufweisen. Die Steuereinrichtung kann eingerichtet sein, um die wenigstens zwei Stellantriebe des zweiten Federförderers abhängig von einer von der Sensoreinrichtung detektierten Verkippung der Feder zu steuern. Dadurch kann zusätzlich zur Längenkorrektur auch eine Korrektur von Verkippungen erfolgen.

Der erste Federförderer und der zweite Federförderer können angeordnet sein, um die Federschlange in einer Ausrichtung zu fördern, bei der eine Axialrichtung der eingetaschten Federn parallel zu einer Axialrichtung der Federn, wenn diese in die Federkern-Montageeinrichtung transferiert sind, ist. Der erste Federförderer und der zweite Federförderer können angeordnet sein, um die Federschlange in einer Ausrichtung zu fördern, bei der die Axialrichtung der eingetaschten Federn vertikal ist. Dadurch wird es überflüssig, die Federn vor einem Transfer zu der Federkern-Montageeinrichtung zu verkippen. Die Bearbeitungszeit kann verkürzt werden.

Die verschiedenen Segmente, deren Länge ermittelt wird, können miteinander überlappen.

Nach einem weiteren Aspekt wird eine Anlage zum Herstellen eines Taschenfederkerns angegeben, die eine Vorrichtung zum Fördern einer Federschlange nach einem Aspekt oder Ausführungsbeispiel und eine Federkern-Montageeinrichtung umfasst. Die Federkern-Montageeinrichtung ist eingerichtet, um mehrere von der Vorrichtung geförderte Federschlangen zu einem Taschenfederkern zusammenzufügen.

Da die Vorrichtung zum Fördern im Vergleich zu herkömmlichen Fördervorrichtungen, die Längenvariationen ausgleichen können, kompakt ausgestaltet sein kann, kann auch die Anlage mit Fördervorrichtung und Federkern-Montageeinrichtung eine kompaktere Ausgestaltung aufweisen.

Die Vorrichtung zum Fördern kann so ausgestaltet sein, dass sie abhängig von den ermittelten Längen der Segmente und den eingestellten Relativ-Fördergeschwindigkeiten rechnerisch die Positionen der Federn der Federschlange in dem Betriebszustand ermittelt, in dem die Federschlange vollständig an dem zweiten Federförderer positioniert und für einen Transfer zu dem Federkern-Montageeinrichtung bereit ist. Die Steuereinrichtung kann eingerichtet sein, um die Federkern-Montageeinrichtung abhängig von den ermittelten Positionen zu steuern. Auf diese Weise können steuerbare Elemente der Federkern-Montageeinrichtung in spezifischer Abhängigkeit von den jeweils zusammenzufügenden Federschlangen kontrolliert werden.

Die Federkern-Montageeinrichtung kann eine Aufbringeinrichtung zum Aufbringen von Klebstoff umfassen. Die Steuereinrichtung kann eingerichtet sein, um eine Klebstoffabgabe durch die Aufbringeinrichtung als Funktion der Zeit abhängig von den ermittelten Positionen zu steuern. Auf diese Weise können Klebepunkte bzw. Klebelinien genau gesetzt werden. Dabei ist es nicht erforderlich, dass die Positionen aller Federn an dem zweiten Federförderer oder in der Federkern-Montageeinrichtung durch eine Messung bestimmt werden müssen.

Die Vorrichtung kann so angeordnet sein, dass der erste Federförderer und der zweite Federförderer die Federschlange in einer Ausrichtung fördern, bei der eine Axialrichtung aller Federn der Federschlange parallel zu der Richtung ist, in der die Längsachsen der Federn in der Federkern-Montageeinrichtung zeigen.

Nach einem weiteren Aspekt wird ein Verfahren zum Fördern einer Federschlange, die eine Mehrzahl von miteinander verbundenen eingetaschten Federn aufweist, angegeben. Die Federschlange wird mit einem ersten Federförderer und mit einem diesem in Förderrichtung nachgeordneten zweiten Federförderer gefördert. Längen mehrerer voneinander verschiedener Segmente der Federschlange werden erfasst, bevor das entsprechende Segment von dem zweiten Federförderer gefördert wird. Abhängig von den erfassten Längen werden zeitsequentiell mehrere Relativ-Fördergeschwindigkeiten zwischen einer Fördergeschwindigkeit des zweiten Federförderers und einer Fördergeschwindigkeit des ersten Federförderers eingestellt, während sowohl der erste Federförderer als auch der zweite Federförderer die Federschlange fördern.

Abhängig von den erfassten Längen und den eingestellten Relativ-Fördergeschwindigkeiten können rechnerisch Positionen von mehreren Federn der Federschlange an dem zweiten Federförderer ermittelt werden.

Eine Federkern-Montageeinrichtung kann abhängig von den rechnerisch ermittelten Positionen gesteuert werden. Insbesondere kann eine Klebstoffabgabe durch ein Element der Federkern-Montageeinrichtung abhängig von den rechnerisch ermittelten Positionen gesteuert werden.

Die Federschlange kann von einer Endlos-Federschlange abgetrennt werden, wobei das Abtrennen erst erfolgt, nachdem zumindest eine der mehreren Relativ-Fördergeschwindigkeiten eingestellt wurde.

Die Federschlange kann mit einer Überführungsgeschwindigkeit zu dem ersten Federförderer überführt werden, wobei die Fördergeschwindigkeit des ersten Federförderers so eingestellt wird, dass eine Differenz zwischen der Überführungsgeschwindigkeit und der Fördergeschwindigkeit des ersten Federförderers einen Betrag aufweist, der kleiner als ein vorgegebener Schwellenwert ist.

Eine Länge des ersten Federförderers kann kleiner als eine Länge der Federschlange an dem ersten Federförderer sein.

Die Federschlange kann so gefördert werden, dass eine Axialrichtung der Federn, wenn die Federschlange von dem ersten Federförderer und dem zweiten Federförderer gefördert wird, parallel zu einer Axialrichtung der Federn, wenn die Federschlange mit wenigstens einer weiteren Federschlange zusammengefügt wird, ist.

Das Verfahren kann von der Vorrichtung zum Fördern von Federn nach einem Aspekt oder Ausführungsbeispiel ausgeführt werden.

Die Vorteile der Ausführungsformen des Verfahrens entsprechen den Vorteilen der korrespondierenden Vorrichtung.

Nach einem weiteren Aspekt wird ein Verfahren zum Herstellen eines Taschenfederkerns angegeben, bei dem mehrere Federschlangen jeweils mit dem Verfahren zum Fördern einer Federschlange nach einem Ausführungsbeispiel zu einer Federkern-Montageeinrichtung transportiert und von der Federkern-Montageeinrichtung zu einem Taschenfederkern zusammengefügt werden.

Die Erfindung wird nachfolgend anhand von Ausführungsbeispielen unter Bezugnahme auf die beigefügte Zeichnung näher erläutert.
Fig. 1 ist eine schematische Schnittansicht einer Vorrichtung zum Fördern von Federn in einer vertikalen Schnittebene.
Figs. 2-4 sind schematische Schnittansichten der Vorrichtung von Fig. 1 zu verschiedenen Zeitpunkten zur Erläuterung eines Verfahrens zum Fördern einer Federschlange.
Fig. 5 ist eine schematische Draufsicht einer Anlage mit der Vorrichtung von Fig. 1 und einer Federkern-Montageeinrichtung.
Fig. 6 ist eine schematische Draufsicht der Anlage von Fig. 5 zu einem anderen Zeitpunkt zur Erläuterung des Verfahrens zum Fördern einer Federschlange.
Fig. 7 illustriert ein Ausgangssignal eines zur Bestimmung von Segmentlängen eingesetzten Sensors.
Fig. 8 illustriert Messpunkte an einer eingetaschten Feder.
Fig. 9 ist eine Flussdiagrammdarstellung eines Verfahrens zum Fördern einer Federschlange.
Fig. 10 ist eine schematische Draufsicht einer Federschlange zur Erläuterung des Verfahrens von Fig. 9.
Fig. 11 ist eine Flussdiagrammdarstellung eines Verfahrens zum Herstellen eines Taschenfederkerns.
Fig. 12 ist eine schematische Perspektivansicht eines ersten Federförderers einer Vorrichtung zum Fördern von Federn.
Fig. 13 ist eine schematische Seitenansicht zur Erläuterung einer Korrektur von Verkippungen.

Nachfolgend werden Ausführungsbeispiele der Erfindung näher erläutert. Die Merkmale der verschiedenen Ausführungsbeispiele können miteinander kombiniert werden, sofern dies in der nachfolgenden Beschreibung nicht ausdrücklich ausgeschlossen wird. Auch wenn einzelne Ausführungsbeispiele im Hinblick auf spezifische Anwendungen, beispielsweise im Kontext einer Anlage, bei der eine Endlos-Taschenfederschlange angeliefert wird, beschrieben werden, ist die vorliegende Erfindung nicht auf diese Anwendungen beschränkt.

Bei Vorrichtungen nach Ausführungsbeispielen werden miteinander verbundene eingetaschte Federn einer Federschlange in einer Förderrichtung gefördert. Die Förderrichtung kann, muss aber nicht überall in der Anlage gleich sein. Begriffe wie "in Förderrichtung vor ... angeordnet" oder "nachgeordnet" sind in herkömmlicher anlagentechnischer Terminologie dahingehend zu verstehen, dass eine geförderte eingetaschte Feder das entsprechende Element vor bzw. nach einem anderen Element passiert.

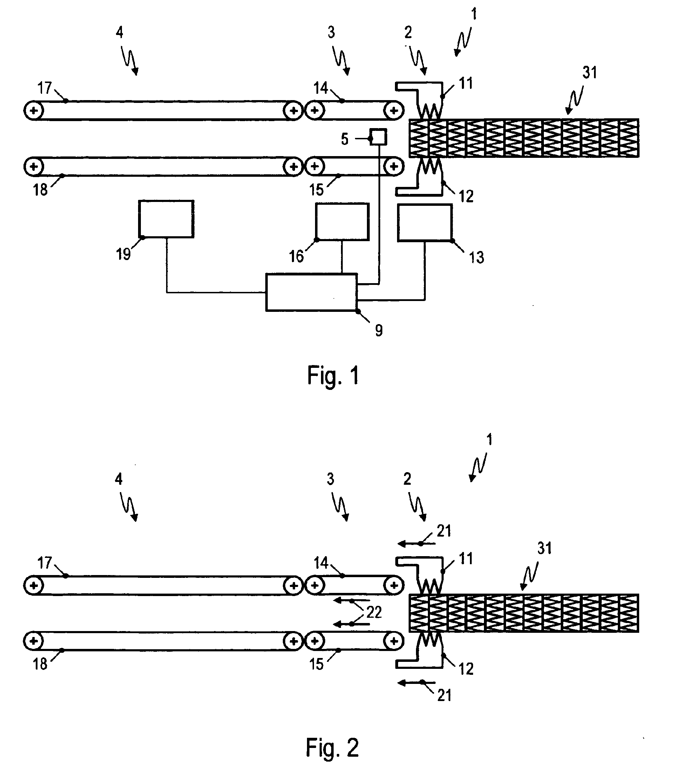

Fig. 1 ist eine schematische Darstellung einer Vorrichtung 1 zum Fördern einer Federschlange 31 nach einem Ausführungsbeispiel. Die Federschlange 31 weist eine Mehrzahl von eingetaschten Federn auf, wobei die eingetaschten Federn durch das Taschenmaterial oder anderweitig miteinander zu der Federschlange 31 verbunden sind. Die Federschlange 31 kann zunächst noch am Kopfende einer Endlos-Federschlange angeordnet sein, bevor sie von der Vorrichtung 1 von dieser abgetrennt wird.

Die Vorrichtung 1 weist einen ersten Federförderer 3 und einen zweiten Federförderer 4 auf. Der erste Federförderer 3 empfängt die Federschlange 31 und fördert diese weiter zum zweiten Federförderer 4. Federn der von dem ersten Federförderer 3 ausgegebene Federschlange 31 können direkt an den zweiten Federförderer 4 übergeben werden. Hilfselemente, wie Rollen oder eine Nockenwelle, können im Übergangsbereich zwischen dem ersten Federförderer 3 und dem zweiten Federförderer 4 vorgesehen sein, um die Überführung der Federschlange vom ersten Federförderer 3 zum zweiten Federförderer 4 zu unterstützen.

Der erste Federförderer 3 kann eine Länge in Förderrichtung (d.h. in Fig. 1-4 in der horizontalen Richtung) aufweisen, die kleiner als die Länge der Federschlange 31 ist. D.h., die Federschlange 31 kann nie vollständig auf dem ersten Federförderer 3 positioniert werden. Die Länge des ersten Federförderers 3 kann insbesondere auch kleiner als eine Soll-Länge sein, die die Federschlange 31 bei ihrem Transfer zu der Federkern-Montageeinrichtung aufweisen soll.

Die Vorrichtung 1 umfasst wenigstens einen Sensor 5 und eine Steuereinrichtung 9. Die Steuereinrichtung 9 ist eine elektronische Recheneinheit, die einen oder mehrere Prozessoren umfassen kann. Der Sensor 5 ist in Förderrichtung vor dem zweiten Federförderer 4 angeordnet, so dass eine eingetaschte Feder an dem Sensor 5 vor Erreichen des zweiten Federförderers 4 vorbeitransportiert wird. Unter Verwendung eines Ausgangssignals des Sensors 5 kann die Länge von Segmenten der Federschlange 31 erfasst werden, bevor die entsprechenden Segmente den zweiten Federförderer 4 erreichen. Der Sensor 5 kann als verhältnismäßig einfacher Sensor ausgestaltet sein, beispielsweise als Distanzsensor, mit dem erfasst werden kann, wann eine Feder an dem Sensor 5 vorbeitransportiert wird. Zur Bestimmung der Länge kann das Ausgangssignal des Sensors 5 mit weiteren Signalen kombiniert werden. Beispielsweise kann der erste Federförderer 3 einen Stellmotor 16 aufweisen. Durch Kombination des Ausgangssignals des Sensors 5, mit dem ermittelt werden kann, wann eine eingetaschte Feder an dem Sensor 5 vorbeigefördert wird, mit der entsprechenden Position des Stellmotors 16 zu diesem Zeitpunkt kann ermittelt werden, welcher Vorschub des ersten Federförderers 3 erforderlich ist, um ein Segment mit einer vorgegebenen Anzahl von Federn an dem Sensor 5 vorbeizufördern. So kann die Länge dieses Segments bestimmt werden, bevor das gesamte Segment an den zweiten Federförderer 4 überführt ist.

Die Steuereinrichtung 9 vergleicht die ermittelte Länge des Segments mit einer Soll-Länge. Eine Relativ-Fördergeschwindigkeit zwischen einer Fördergeschwindigkeit des ersten Federförderers 3 und einer Fördergeschwindigkeit des zweiten Federförderers 4 wird abhängig von der ermittelten Länge eingestellt werden. Dazu kann die Steuereinrichtung 9 einen Quotienten zwischen der Soll-Länge und der ermittelten Ist-Länge, Lₛₒₗₗ/Lᵢₛₜ, des entsprechenden Segments bestimmen. Die Fördergeschwindigkeit v₂ des zweiten Federförderers kann dann beispielsweise als v₂ = v₁· Lₛₒₗₗ/Lᵢₛₜ eingestellt werden. Alternativ kann ein additiver Geschwindigkeits-Offset, um den v₂ von v₁ verschieden ist, abhängig von dem Quotienten zwischen Soll- und Ist-Länge bestimmt werden. Eine entsprechende Änderung der Fördergeschwindigkeit des zweiten Federförderers 4 wird zu dem Zeitpunkt vorgenommen, an dem eine in Förderrichtung vorderste Feder des entsprechenden Segments den Übergang zwischen erstem Federförderer 3 und zweitem Federförderer 4 erreicht. Die Lage des Sensors 5 relativ zu dem Übergang zwischen dem ersten Federförderer 3 und dem zweiten Federförderer 4 ist bekannt, so dass dieser Zeitpunkt ebenfalls anhand des Vorschubs des ersten Federförderers 4 bestimmt werden kann. Anstelle einer Anpassung der Fördergeschwindigkeit des zweiten Federförderers 4 kann auch eine entsprechend umgekehrte Anpassung der Fördergeschwindigkeit des ersten Federförderers 3 erfolgen, wenn die in Förderrichtung vorderste Feder des entsprechenden Segments den Übergang zwischen erstem Federförderer 3 und zweitem Federförderer 4 erreicht.

Die Relativ-Fördergeschwindigkeit wird von der Steuereinrichtung 9 dabei jeweils so eingestellt, dass sich die vor dem zweiten Federförderer 4 bestimmte Länge des Segments auf die Soll-Länge ändert, wenn das Segment vollständig an den zweiten Federförderer 4 überführt wurde. Ist der Vorschub des ersten Federförderers 3, der erforderlich ist, um ein Segment an dem Sensor 5 vorbeizuführen, kleiner als die Soll-Länge des Segments, wird die Relativ-Fördergeschwindigkeit so eingestellt, dass die Fördergeschwindigkeit des zweiten Federförderers 4 größer als die Fördergeschwindigkeit des ersten Federförderers 3 ist. Ist der Vorschub des ersten Federförderers 3, der erforderlich ist, um ein Segment an dem Sensor 5 vorbeizuführen, größer als die Soll-Länge des Segments, wird die Relativ-Fördergeschwindigkeit so eingestellt, dass die Fördergeschwindigkeit des zweiten Federförderers 4 kleiner als die Fördergeschwindigkeit des ersten Federförderers 3 ist. Der Geschwindigkeitsquotient v₂/v₁ beim Überführen des jeweiligen Segments vom ersten Federförderer 3 zum zweiten Federförderer 4 wird somit abhängig von einem Vergleich der vor dem zweiten Federförderer 4 gemessenen Ist-Länge des Segments mit der Soll-Länge des Segments selektiv entweder größer oder kleiner als 1,0 gewählt.

Die Segmente umfassen jeweils mehrere Federn. Die Segmente können miteinander überlappen. Dabei können auch Segmente mit unterschiedlicher Federanzahl zur Längenbestimmung und anschließenden Einstellung der Relativ-Fördergeschwindigkeit herangezogen werden, wobei die Soll-Länge dann jeweils unterschiedlich sein kann.

Die Längenbestimmung und Anpassung der Relativ-Fördergeschwindigkeit wird durch die Steuereinrichtung 9 durch segmentweise Längenbestimmung und entsprechende Einstellung der Relativ-Fördergeschwindigkeiten für mehrere Segmente der Federschlange 31 vorgenommen. Es ist nicht nötig, die gesamte Federschlange 31 zunächst in einem Pufferbereich zu positionieren, um dort ihre Länge zu ermitteln. Die fortgesetzte Ermittlung von Längen von Segmenten und entsprechende Einstellung von Relativ-Fördergeschwindigkeiten, während die Federschlange 31 teilweise an dem zweiten Federförderer 4 und teilweise an dem ersten Federförderer 3 positioniert ist, erlaubt es, den ersten Federförderer 3 im Vergleich zu herkömmlichen Anlagen, die eine Einstellung der Länge erlauben, kompakter auszugestalten.

Wenn abhängig von dem Ausgangssignal des Sensors 5 bestimmt werden kann, bei welcher Stellung des Stellmotors 16 ein bestimmter Punkt der eingetaschten Feder, z.B. eine Schweißnaht, an dem Sensor 5 vorbeigeführt wird, kann diese Information auch verwendet werden, um die Zeitpunkte zu bestimmen, zu denen die Relativ-Fördergeschwindigkeit angepasst wird. Weiterhin kann die Steuereinrichtung 9 diese Information mit den als Funktion der Zeit bekannten Fördergeschwindigkeiten, insbesondere mit den verschiedenen eingestellten Relativ-Fördergeschwindigkeit, kombinieren, um Positionen aller Federn der Federschlange 31 zu ermitteln, wenn diese vollständig an dem zweiten Federförderer 4 angeordnet und für einen Transfer in die Federkern-Montageeinrichtung bereit ist.

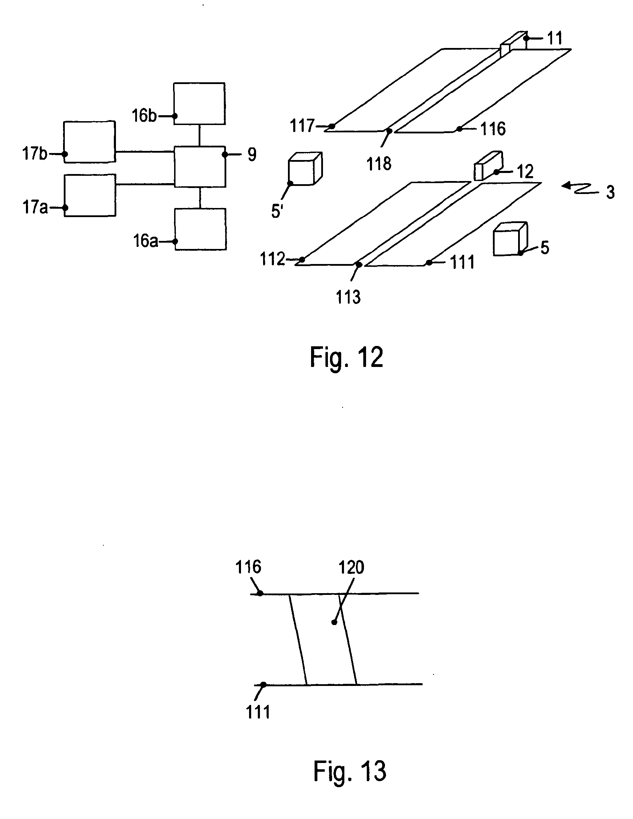

Der erste Federförderer 3 und der zweite Federförderer 4 können verschiedene Ausgestaltungen aufweisen. Beispielsweise kann jeder der Federförderer ein Paar von umlaufenden Förderbändern und einen Stellmotor umfassen, der eines oder beide der Förderbänder antreibt. Der erste Federförderer 3 kann umlaufende Förderbänder 14 und 15 umfassen, zwischen denen die eingetaschten Federn der Federschlange 31 reibschlüssig gehalten werden. Wie unter Bezugnahme auf Fig. 12 noch näher beschrieben wird, kann der erste Federförderer zwei Paare von umlaufenden Förderbändern umfassen. Ein Stellmotor 16 treibt die Förderbänder 14 und 15 an. Der Stellmotor 16 ist mit der Steuereinrichtung 9 gekoppelt. Die Steuereinrichtung 9 kann so die Fördergeschwindigkeit des ersten Federförderers 3 kontrollieren. Zusätzlich können durch eine entsprechende Abfrage des Stellmotors 16 bzw. des Programmmoduls, das für die Steuerung des Stellmotors 16 verantwortlich ist, Informationen über den Vorschub des ersten Federförderers 3 gewonnen werden, die zur Bestimmung der Längen mehrerer Segmente der Federschlange 31 eingesetzt werden.

Der zweite Federförderer 4 kann umlaufende Förderbänder 17 und 18 umfassen, zwischen denen die eingetaschten Federn der Federschlange 31 reibschlüssig gehalten werden. Ein Stellmotor 19 treibt die Förderbänder 17 und 18 an. Der Stellmotor 19 ist mit der Steuereinrichtung 9 gekoppelt. Die Steuereinrichtung 9 kann so die Fördergeschwindigkeit des zweiten Federförderers 4 abhängig von den Längen der Segmente kontrollieren.

Die umlaufenden Förderbänder der Federförderer können so ausgestaltet sein, dass ein Abstand zwischen den Förderbändern eingestellt werden kann. Auf diese Weise kann eine Anpassung an unterschiedliche Federhöhen erfolgen.

Die Vorrichtung 1 kann eine Überführungseinrichtung 2 aufweisen, die dem ersten Federförderer 3 ein Kopfende der Federschlange 31 zuführt. Die Überführungseinrichtung 2 kann als Einschubeinrichtung oder Einzugeinrichtung ausgestaltet sein. Die Überführungseinrichtung 2 kann ein Paar von Eingriffselementen 11, 12 aufweisen, die gegenüberliegende axiale Enden der Federschlange 31 ergreifen können. Die Überführungseinrichtung 2 kann zwischen einem Haltezustand, in dem sie eine Federschlange ergreift, und einem Freigabezustand zum Freigeben der Federschlange überführt werden. Dazu kann die Steuereinrichtung 9 ein entsprechendes Steuersignal bereitstellen. Zusätzlich können die Eingriffselemente 11, 12 in Förderrichtung beweglich gelagert und durch einen Antrieb 13 in Förderrichtung antreibbar sein. Die Eingriffselemente 11, 12 können so angeordnet sein, dass das Eingriffselement 11 in einen Spalt zwischen zwei oberen Förderbändern des ersten Federförderers 3 einfahren kann, und dass das Eingriffselement 12 in einen Spalt zwischen zwei unteren Förderbändern des ersten Federförderers 3 einfahren kann.

Die Steuereinrichtung 9 kann die Überführungseinrichtung 2 und den ersten Federförderer 3 so steuern, dass Schlupf zwischen der Federschlange 31 und dem ersten Federförderer 3 verringert wird. Dazu kann die Steuereinrichtung 9 den ersten Federförderer 3 so steuern, dass er auf eine Fördergeschwindigkeit beschleunigt wird, die um weniger als ein Schwellenwert von der Bewegungsgeschwindigkeit der Überführungseinrichtung 2 in Förderrichtung verschieden ist. Erst dann erfolgt eine Freigabe der Federschlange 31, so dass diese vom ersten Federförderer 3 weitergefördert wird. Die Steuereinrichtung 9 kann den ersten Federförderer 3 so steuern, dass die Fördergeschwindigkeit des ersten Federförderers zu dem Zeitpunkt, zu dem die Überführungseinrichtung 2 die Federschlange 31 freigibt, gleich der Bewegungsgeschwindigkeit der Eingriffselemente 11, 12 in Förderrichtung ist.

Wenn Schlupf zwischen der Federschlange 1 und dem ersten Federförderer weitgehend verringert werden kann, kann der Sensor 5, dessen Ausgangssignal zum Bestimmen von Länge der Segmente der Federschlange 31 verwendet wird, auch in Förderrichtung vor dem ersten Federförderer 3 vorgesehen sein. Dies erlaubt eine weitere Verkürzung des ersten Federförderers 3.

Es kann auch zusätzlich zu einem an dem ersten Federförderer positionierten Sensor 5 ein zusätzlicher Sensor vorgesehen sein, der in Förderrichtung vor dem ersten Federförderer vorgesehen ist. Durch Verwendung der Ausgangssignale beider Sensoren kann die Genauigkeit, mit der Längen von Segmenten bestimmt werden, erhöht werden. Alternativ oder zusätzlich kann der in Förderrichtung vor dem ersten Federförderer angeordnete zusätzliche Sensor auch verwendet werden, um Federn und Schweißnähte zu zählen.

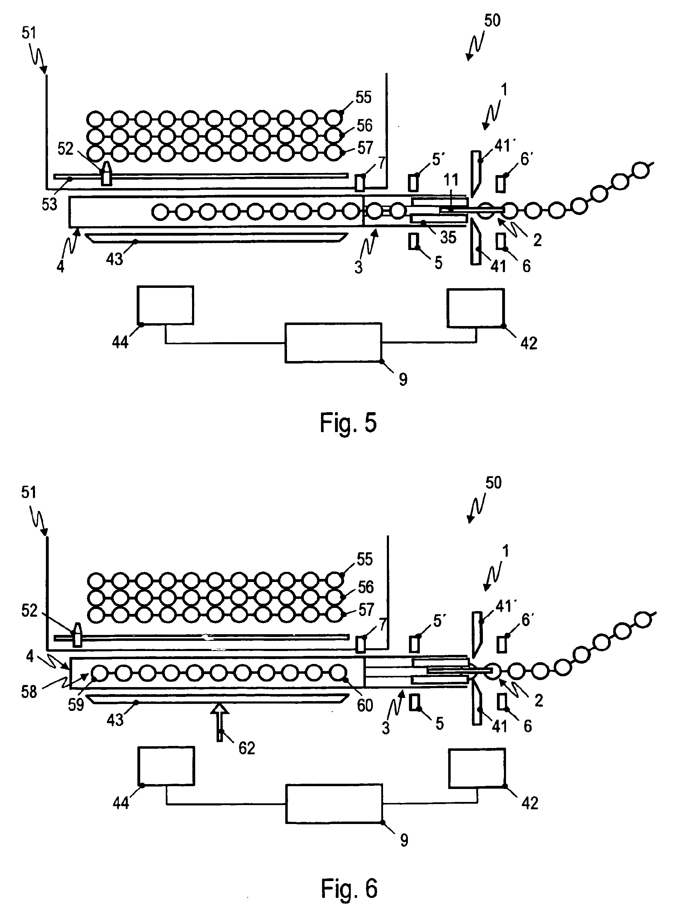

Die Vorrichtung 1 kann auch weitere Funktionseinheiten aufweisen. Die Vorrichtung 1 kann insbesondere eine (nur in Fig. 5 und 6 dargestellte) Abtrenneinrichtung aufweisen, die die Federschlange 31 von dem Rest der Endlos-Federschlange abtrennt. Die Abtrenneinrichtung kann von der Steuereinrichtung 9 so gesteuert werden, dass die Federschlange 31 von dem Rest der Endlos-Federschlange abgetrennt wird, nachdem ein Kopfende der Federschlange 31 bereits an dem zweiten Federförderer 4 positioniert ist. Eine Anpassung der Relativ-Fördergeschwindigkeiten abhängig von ermittelten Längen der Segmente kann somit bereits erfolgen, bevor die Federschlange 31 von dem Rest der Endlos-Federschlange abgetrennt wurde. Die Abtrenneinrichtung kann so ausgestaltet sein, dass sie den thermoplastischen Schlauch, in dem die Federn eingetascht sind, durchtrennt und verschweißt.

Unter Bezugnahme auf Fig. 2-4 wird die Funktionsweise der Vorrichtung 1 zum Fördern der Federschlange weiter erläutert. Strukturelle Elemente wie Antriebe oder Steuereinrichtung sind aus Gründen der Übersichtlichkeit in Fig. 2-4 nicht dargestellt.

Fig. 2 zeigt einen Zustand, in dem die Überführungseinrichtung 2 ein Kopfende der Federschlange 31 ergriffen hat, um die Federschlange 31 zu dem ersten Federförderer 3 zu überführen. Die Federschlange 31 kann in diesem Zustand noch am Kopfende einer Endlos-Federschlange angeordnet und mit dem Rest der Endlos-Federschlange verbunden sein.

Die Überführungseinrichtung 2 wird in Förderrichtung mit einer Bewegungsgeschwindigkeit 21 bewegt. Der erste Federförderer 3 wird so gesteuert, dass eine Bewegungsgeschwindigkeit 22 an den gegenüberliegenden Innenseiten der beiden Förderbänder 14 und 15 im Wesentlichen der Bewegungsgeschwindigkeit 21 des Überführungseinrichtung 2 und somit der Federschlange 31 entspricht. Wenn die Fördergeschwindigkeit 22 des ersten Federförderers gleich der Bewegungsgeschwindigkeit 21 ist und die Federschlange 31 zwischen die Förderbänder 14 und 15 des ersten Federförderers 3 eingeführt ist, gibt die Überführungseinrichtung 2 die Federschlange 31 frei. Diese wird von dem ersten Federförderer 3 weitergefördert.

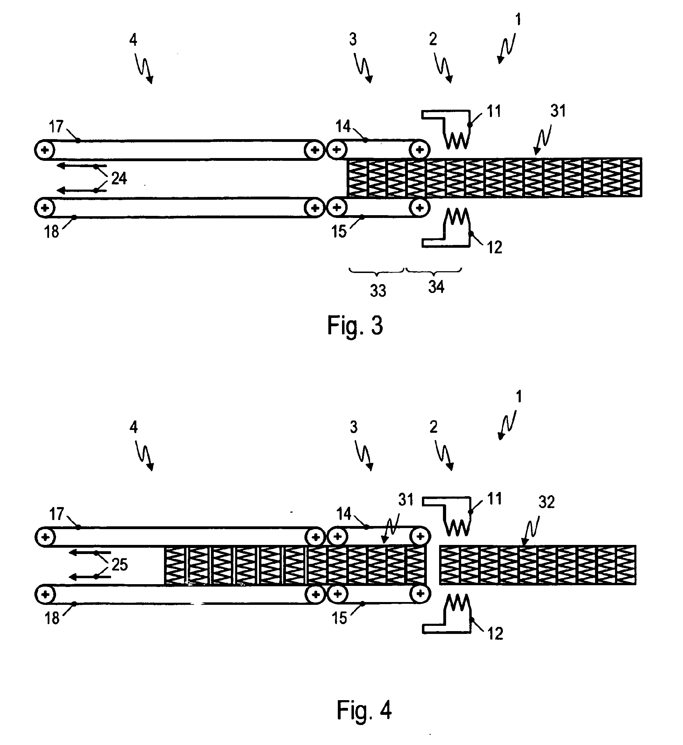

Fig. 3 zeigt einen Zustand, in dem ein Kopfende der Federschlange 31 an dem ersten Federförderer positioniert ist. Bevor Segmente 33, 34 der Federschlange 31 zu dem zweiten Federförderer 4 überführt werden, wird deren Ist-Länge an dem ersten Federförderer 3 bestimmt. Die Relativ-Fördergeschwindigkeit zwischen der Fördergeschwindigkeit des zweiten Federförderers 4 und der Fördergeschwindigkeit des ersten Federförderers 3 wird so eingestellt, dass beim Überführen des jeweiligen Segments eine Längenänderung von der Ist-Länge, die an dem ersten Federförderer 3 bestimmt wurde, zu der Soll-Länge an dem zweiten Federförderer 4 erfolgt.

Die bestimmte Relativ-Fördergeschwindigkeit kann beispielsweise ein Geschwindigkeitsquotient zwischen der Fördergeschwindigkeit des zweiten Federförderers 4 und der Fördergeschwindigkeit des ersten Federförderers 3 sein. Die Fördergeschwindigkeit 24 des zweiten Federförderers 4 kann so eingestellt werden, dass der entsprechende Geschwindigkeitsquotient vorliegt, so lange das entsprechende Segment von dem ersten Federförderer 3 an den zweiten Federförderer 4 überführt wird. Alternativ kann, insbesondere bei überlappenden Segmenten, eine Nachjustierung eines Geschwindigkeitsquotienten erfolgen, wenn zunehmend längere Segmente gemessen werden.

Längen werden segmentweise bestimmt, bevor das entsprechende Segment vollständig an den zweiten Federförderer überführt ist. Entsprechend werden die Relativ-Fördergeschwindigkeiten segmentweise bestimmt.

Fig. 4 zeigt einen Zustand, in dem ein Kopfende der Federschlange 31 bereits an dem zweiten Federförderer 4 positioniert ist und die Federschlange 31 von dem Rest der Endlos-Federschlange abgetrennt wurde.

Zum Abtrennen der Federschlange 31 werden beide Federförderer 3, 4 synchron gestoppt. Die Abtrenneinrichtung schneidet den Schlauch des Taschenmaterials ab und verschweißt diesen am Ende der Federschlange 31. Zu diesem Zeitpunkt befindet sich das Kopfende der Federschlange 31 bereits an dem zweiten Federförderer 4. Entsprechend wird bzw. werden eine oder mehrere Anpassungen der Relativ-Fördergeschwindigkeit bereits vorgenommen, bevor die Federschlange 31 abgetrennt und an ihrem hinteren Ende verschweißt wird.

Nach dem Abtrennen werden beide Federförderer wieder gestartet, wobei eine Relativ-Fördergeschwindigkeit von der Steuereinrichtung 9 abhängig von dem Verhältnis von Ist-Länge zu Soll-Länge für eines der Segmente eingestellt wird, für das vorher der Vergleich von Ist-Länge zu Soll-Länge durchgeführt wurde. Die Fördergeschwindigkeit 25 des zweiten Federförderers 4 und die Fördergeschwindigkeit des ersten Federförderers 3 werden entsprechend eingestellt.

Die Ermittlung von Längen von Segmenten der Federschlange 31 und/oder die Einstellung weiterer Relativ-Fördergeschwindigkeiten kann nach dem Abtrennen der Federschlange entsprechend fortgesetzt werden.

Während in Fig. 3 schematisch zwei nicht überlappende Segmente 33, 34 dargestellt sind, kann die Einjustierung der Relativ-Fördergeschwindigkeit vorteilhaft auch erfolgen, wenn die Segmente miteinander überlappen.

Fig. 5 und Fig. 6 zeigen eine schematische Draufsicht einer Anlage 50, die die Vorrichtung 1 zum Fördern von Federschlangen und eine Federkern-Montageeinrichtung 51 aufweist.

Die Vorrichtung 1 kann die unter Bezugnahme auf Fig. 1-4 beschriebenen Merkmale und Elemente aufweisen. Insbesondere können der erste Federförderer 3 und der zweite Federförderer 4 jeweils einen Stellantrieb aufweisen, der von der Steuereinrichtung 9 gesteuert wird. Das Eingriffselement 11 der Überführungseinrichtung 2 ist in einer Linearführung 35 in Förderrichtung beweglich gelagert. Das Eingriffselement 11 kann so gelagert sein, dass es im Betrieb zwischen ein Paar von oberen Förderbändern des ersten Federförderers einfahren kann.

Bei der Vorrichtung 1 können, wie in Fig. 5 und Fig. 6 dargestellt, mehrere Sensoren 5, 5', 6, 6' vorgesehen sein, deren Ausgangssignale verwendet werden, um die Längen von Segmenten der Federschlange zu bestimmen. Ein Sensor 5 oder ein Paar von Sensoren 5, 5' ist an dem ersten Federförderer 3 positioniert. Ein weiterer Sensor 6 oder ein Paar von Sensoren 6, 6' ist in Förderrichtung vor dem ersten Federförderer 3 positioniert. Der Abstand des Sensors 5 von dem weiteren Sensor 6 ist bekannt. Ausgangssignale des Sensors 5 und des weiteren Sensors 6 können kombiniert werden, um die Länge des Segments mit höherer Genauigkeit bestimmen zu können. Auf diese Weise kann beispielsweise eine Mittelwertbildung des Vorschubs des ersten Federförderers 3, der erforderlich ist, um eine vorgegebene Anzahl von eingetaschten Federn an den Sensoren 6, 6' vorbeizuführen, und des Vorschubs des ersten Federförderers 3, der erforderlich ist, um dasselbe Segment der Federschlange an den Sensoren 5, 5' vorbeizuführen, vorgenommen werden, um die Länge des Segments zu bestimmen. Alternativ oder zusätzlich können Ausgangssignale der Sensoren 6, 6' verwendet werden, um Federn und Schweißnähte zu zählen.

Durch Verwendung eines Paars von Sensoren 5, 5' und/oder 6, 6' kann die Anzahl von gewonnenen Messpunkten weiter erhöht werden. Für ein Paar von Sensoren, das entgegengesetzte Seiten der Federschlange abtastet, kann jeweils abhängig von dem Ausgangssignal jedes der Sensoren die Stellung des Stellantriebs des ersten Federförderers ermittelt werden, bei dem die Längsachse der eingetaschten Feder den entsprechenden Sensor passiert. Durch Mittelwertbildung kann die Zuverlässigkeit des bestimmten Stellwerts erhöht werden.

Die Sensoren 5, 5' können nicht nur so angeordnet sein, dass sie unterschiedliche Seiten der Federschlange abtasten, sondern können auch entlang der Längsachse der Federn gegeneinander versetzt sein. D.h. die Sensoren 5 und 5' können sowohl entlang einer ersten Richtung, die senkrecht zur Förderrichtung ist, als auch in einer zweiten Richtung, die senkrecht zur Förderrichtung und zu der ersten Richtung ist, gegeneinander versetzt sein. Dadurch können die Sensoren 5, 5' auch verwendet werden, um eine Verkippung von Federn zu detektieren und zu korrigieren. Dies wird unter Bezugnahme auf Fig. 13 noch näher beschrieben.

Die Vorrichtung 1 kann einen Sensor 7 aufweisen, der an dem zweiten Federförderer 4 positioniert ist. Mit dem Sensor 7 kann ein Anfang und Ende der Federschlange erfasst werden, und/oder es kann die Gesamtanzahl von Federn der Federschlange gezählt werden. Auf diese Weise kann bei Abweichungen von Soll-Werten der Gesamtlänge oder der Gesamtanzahl von Federn der Betrieb der Anlage 50 gestoppt und ein Warnsignal ausgegeben werden.

Die Steuereinrichtung 9 kann Ausgangssignale aller Sensoren 5, 5', 6, 6' und 7 oder eines Teils dieser Sensoren heranziehen, um zu überprüfen, ob eine Fehler fehlt oder ob eine Schweißnaht zwischen eingetaschten Federn der Federschlange nicht gesetzt wurde. Im Fehlerfall kann wiederum der Betrieb der Anlage 1 gestoppt und ein Warnsignal ausgegeben werden.

Die Vorrichtung 1 kann eine Abtrenneinrichtung mit Abtrennelementen 41, 41' aufweisen, die zumindest quer zur Förderrichtung beweglich gelagert sind. Die Abtrenneinrichtung weist einen Antrieb 42 auf, der von der Steuereinrichtung 9 gesteuert wird, um eine Federschlange von dem Rest der Endlos-Federschlange abzutrennen und zu verschweißen. Diese Vorgänge können wie unter Bezugnahme auf Fig. 1-4 beschrieben koordiniert mit dem Betrieb des ersten Federförderers 3 und des zweiten Federförderers 4 erfolgen.

Die Vorrichtung 1 weist eine Transfereinrichtung 43 auf, mit der die Federschlange zu der Federkern-Montageeinrichtung 51 transferiert werden kann. Die Steuereinrichtung 9 kontrolliert einen Antrieb 44 der Transfereinrichtung 43 so, dass eine Federschlange, die in einer gewünschten Endposition an dem zweiten Federförderer positioniert ist, von der Transfereinrichtung 43 in die Federkern-Montageeinrichtung 51 transferiert wird.

Bei der Anlage 50 werden die eingetaschten Federn so gefördert, dass eine Axialrichtung der Federn in dem ersten und zweiten Federförderer parallel zu einer Axialrichtung der Federn in der Federkern-Montageeinrichtung 51 ist. Die Federn können so gefördert werden, dass ihre Axialrichtung vertikal ist.

Die Federkern-Montageeinrichtung 51 ist ausgestaltet, um verschiedene Federschlangen miteinander zu verbinden. Die Steuereinrichtung 9 kann abhängig von den vor dem zweiten Federförderer 4 erfassten Längen von Segmenten der Federschlange und abhängig von den eingestellten Relativ-Fördergeschwindigkeiten rechnerisch ermitteln, wo die einzelnen Federn an dem zweiten Federförderer 4 positioniert sind, wenn die Federschlange zu der Federkern-Montageeinrichtung 51 transferiert wird. Diese Information kann zur Ansteuerung der Federkern-Montageeinrichtung 51 verwendet werden.

Die Federkern-Montageeinrichtung 51 kann eine Klebstoffdüse 52 aufweisen, um Klebstoffpunkte oder Klebstofflinien auf eine in die Federkern-Montageeinrichtung 51 transferierte Federschlange aufzubringen. Wenn die nachfolgende Federschlange zu der Federkern-Montageeinrichtung 51 transferiert wird, werden die Federschlangen entlang der gesetzten Klebstoffpunkte oder Klebstofflinien verklebt.

Die Klebstoffdüse 52 ist linear beweglich. Die Klebstoffdüse 52 kann an einer Führung 53 angebracht sein, die sich parallel zu dem zweiten Federförderer 4 erstreckt. Ein (nicht dargestellter) Antrieb bewegt die Klebstoffdüse 52 entlang einer in die Federkern-Montageeinrichtung 51 transferierten Federschlange 57, die bereits mit Federschlangen 55 und 56 verbunden ist. Der Antrieb kann die Klebstoffdüse 52 mit konstanter Geschwindigkeit entlang der Federschlange 57 bewegen. Dadurch kann unerwünschte Tropfenbildung vermindert werden.

Ein Ein-/Aus-Zustand der Klebstoffdüse 52 als Funktion der Zeit wird von der Steuereinrichtung 9 gesteuert. Dabei kann der Ein-/Aus-Zustand und somit die Klebstoffabgabe abhängig von den rechnerisch ermittelten Positionen der Federn der Federschlange 57 erfolgen, die die Steuereinrichtung 9 aus dem gemessenen Segmentlängen und eingestellten Relativ-Fördergeschwindigkeiten rechnerisch ermittelt.

Das Aufbringen von Klebstofflinien oder Klebstoffpunkten auf die Federschlange 57 kann zeitlich überlappend mit dem Transport der nachfolgenden Federschlange durch den ersten Federförderer 3 und zweiten Federförderer 4 erfolgen. Auf diese Weise kann eine Soll-Länge der nachfolgenden Federschlange eingestellt und diese für einen Transfer zu der Federkern-Montageeinrichtung positioniert werden, während zeitlich parallel Klebstofflinien oder Klebstoffpunkten auf die Federschlange 57 aufgebracht werden. Dadurch kann eine höhere Arbeitsgeschwindigkeit der Anlage 50 erreicht werden.

Fig. 6 zeigt die Anlage 50 in einem Zustand, in dem die Federschlange 58 für einen Transfer zu der Federkern-Montageeinrichtung 51 positioniert ist. Die Gesamtlänge zwischen einer in Förderrichtung vordersten Feder 59 und einer hintersten Feder 60 der Federschlange 58 wurde beim Fördern eingestellt. Die Transfereinrichtung wird in eine Richtung 62 verschoben, um die Federschlange 58 zu der Federkern-Montageeinrichtung 51 zu transferieren.

Parallel zu dem Transferieren der Federschlange 58 zu der Federkern-Montageeinrichtung 51 kann die nachfolgende Federschlange am Kopfende der Endlos-Federschlange zu dem ersten Federförderer 3 überführt werden.

Die Sensoren, die bei der Vorrichtung 1 zur Längenmessung verwendet werden, können verschiedene Ausgestaltungen aufweisen. Bei einer Ausführungsform können die Sensoren 5, 5', 6, 6' als Distanzsensoren ausgestaltet sein. Die Sensoren können optische Sensoren sein. Aus dem Ausgangssignal, das den Abstand zwischen Taschenmaterial und Sensor darstellt, kann ermittelt werden, wann die Längsachse der Feder den entsprechenden Sensor passiert. Durch eine entsprechende Abfrage der Stellung des Stellantriebs des ersten Federförderers bzw. des Programmmoduls der Steuereinrichtung, das den Stellantrieb des ersten Federförderers steuert, zu diesen Zeitpunkten kann die Länge eines Segments der Federschlange ermittelt werden. Beispielsweise kann abhängig von der Position des ersten Federförderers, wenn eine Längsachse der ersten Feder der Federschlange einen Sensor passiert, und von der Position des ersten Federförderers, wenn zu einem späteren Zeitpunkt eine Längsachse der N_{S0}-ten Feder der Federschlange den entsprechenden Sensor passiert, eine Ist-Länge des Segments von der Längsachse der ersten Feder bis zur Längsachse der N_{S0}-ten Feder ermittelt werden, die dieses Segment vor dem zweiten Federförderer aufweist. Entsprechend kann eine Länge des Segments auch abhängig von Positionen von Schweißnähten ermittelt werden.

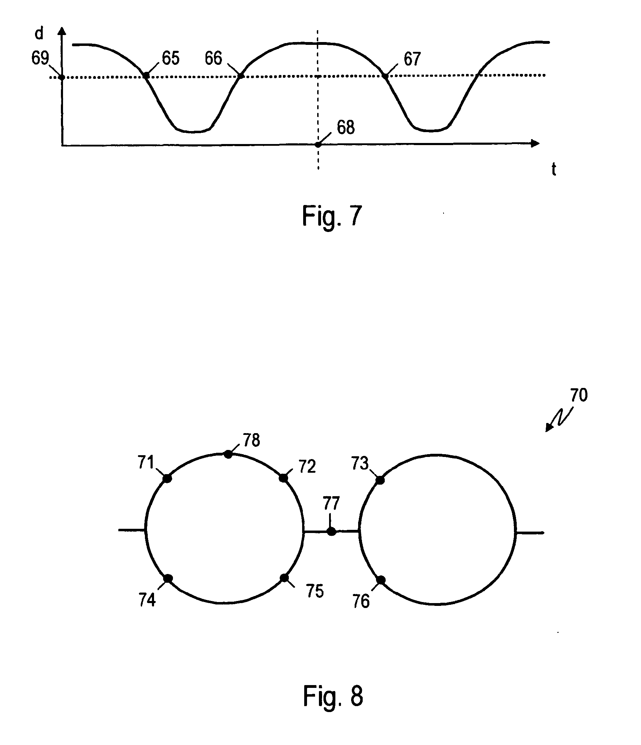

Fig. 7 ist eine schematische Darstellung eines Abstandssignals, wie es von den Sensoren 5, 5', 6, 6', 7 erfasst werden kann. Bei minimalem Abstand zwischen Sensor und Taschenmaterial befindet sich die Längsachse der eingetaschten Feder auf Höhe des entsprechenden Sensors. Ähnlich können auch die Positionen von Schweißnähten aus dem Abstandssignal ermittelt werden.

Die Steuereinrichtung 9 kann den gemessenen Abstand mit einem Schwellenwert 68 vergleichen, der größer als der kleinste Abstand zwischen Sensor und Taschenmaterial und kleiner als der größte Abstand zwischen Sensor und Taschenmaterial gewählt ist. Die Punkte 65, 66 und 67, bei denen der gemessene Abstand den Schwellenwert erreicht, werden ermittelt.

Bei Erreichen des Schwellenwerts bei 66 und 67, die gegenüberliegenden Flanken von aufeinanderfolgenden Federn entsprechen, kann jeweils die Stellung des Stellantriebs des ersten Federförderers 3 abgefragt werden. Durch Mittelwertbildung dieser beiden Werte kann rechnerisch die Stellung ermittelt werden, bei der die Schweißnaht zwischen den Federn den Sensor passiert.

Eine vorderste Schweißnaht der Federschlange kann rechnerisch durch Extrapolation ermittelt werden.

Falls gewünscht oder erforderlich, kann auch ermittelt werden, wann eine Mittelachse der Feder den Sensor passiert. Bei Erreichen des Schwellenwerts bei 65 und 66 kann jeweils die Stellung des Stellantriebs des ersten Federförderers 3 abgefragt werden. Durch Mittelwertbildung dieser beiden Werte kann rechnerisch die Stellung ermittelt werden, bei der die Längsachse der Feder den Sensor passiert.

Fig. 8 veranschaulicht diese Messprozedur an einem Paar von eingetaschten Federn 70. Der Abstand erreicht jeweils den Schwellenwert 69, wenn die Punkte 71, 72 und 73 den Sensor passieren. Durch Mittelwertbildung der Stellungen des Stellantriebs wird ermittelt, bei welcher Stellung des Stellantriebs der Punkt 77, der der Schweißnaht entspricht, den Sensor passiert. Zu diesem Zeitpunkt bzw. bei der entsprechenden Stellung des Stellantriebs wird die Schweißnaht zwischen den Federn an dem Sensor vorbeigeführt.

Durch diese Vorgehensweise kann die Stellung des Stellantriebs zu dem Zeitpunkt, an dem der Punkt 77 den Sensor passiert, zuverlässig ermittelt werden. Eine direkte Ermittlung der Position der Schweißnaht aus dem Abstandssignal, die eine größere Fehleranfälligkeit aufweisen kann, kann so vermieden werden.

Entsprechend kann auch ermittelt werden, bei welcher Stellung des Stellantriebs der Punkt 78 den Sensor passiert.

Wenn ein Paar von Sensoren an entgegengesetzten Seiten der Federschlange vorgesehen ist, kann entsprechend mit dem Ausgangssignal des weiteren Sensors des Paares verfahren werden. Der Abstand des Taschenmaterials von dem weiteren Sensor erreicht jeweils den Schwellenwert 68, wenn die Punkte 74, 75 und 76 den Sensor passieren. Durch Mittelwertbildung der Stellungen des Stellantriebs wird rechnerisch ermittelt, bei welcher Stellung des Stellantriebs der Punkt 77 an dem Sensor vorbeigeführt wird.

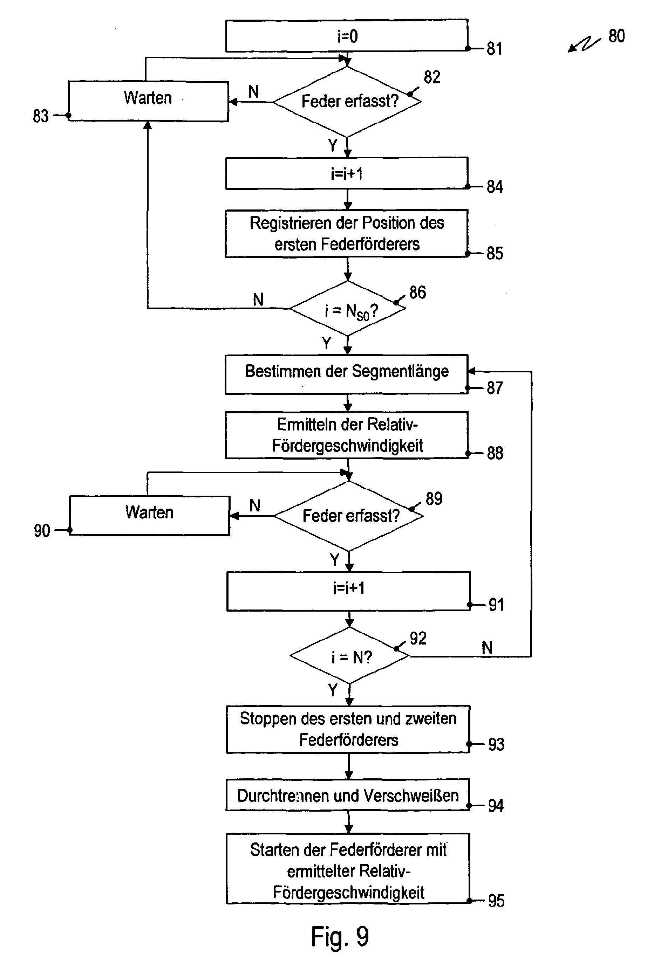

Fig. 9 ist eine Flussdiagrammdarstellung eines Verfahrens 80 zum Fördern einer Federschlange, die miteinander verbundene eingetaschte Federn umfasst. Das Verfahren kann von der Steuereinrichtung 9 durchgeführt werden. Die Federschlange wird mit einem ersten und einem zweiten Federförderer gefördert. Der erste Federförderer fördert die Federschlange zu dem zweiten Federförderer.

Bei 81 wird ein Zähler i für Federn, die einen Sensor passieren, initialisiert.

Bei 82 wird überprüft, ob eine Feder erfasst wird, die an dem Sensor vorbeigeführt wird. Das Erfassen der Feder erfolgt in Förderrichtung vor dem zweiten Federförderer. Das Erfassen der Feder kann an einem Einlaufbereich des ersten Federförderers oder vor dem Einlaufbereich des ersten Federförderers erfolgen.

Falls bei 82 keine Feder erfasst wird, kehrt das Verfahren nach einer Wartezeit 83 zur Überprüfung 82 zurück. Dies wird wiederholt, bis eine Feder erfasst wird.

Falls bei 82 ermittelt wird, dass eine Feder erfasst wird, die an dem Sensor vorbeigeführt wird, wird bei 84 der Zähler i inkrementiert.

Bei 85 wird die Position des ersten Federförderers registriert. Dazu kann eine Stellung eines Stellantriebs des ersten Federförderers abgefragt und gespeichert werden. Die Ermittlung der Stellung kann wie unter Bezugnahme auf Fig. 7 und 8 beschrieben erfolgen.

Bei 86 wird überprüft, ob der Zählerwert i gleich einer vorgegebenen ganzen Zahl N_{S0} ist. Falls i nicht gleich Nₛ₀ ist, fährt das Verfahren bei 83 fort. Die Zahl Nₛ₀ entspricht der Anzahl von Federn in dem ersten Segment, für das abhängig von einem Vergleich zwischen Ist- und Soll-Länge die Relativ-Fördergeschwindigkeit ermittelt wird. Die Zahl Nₛ₀ ist dabei so gewählt, dass das Segment mit Nₛ₀ Federn vollständig an dem ersten Federförderer positioniert werden kann. Die Zahl Nₛ₀ ist kleiner als die Gesamtanzahl von Federn der Federschlange.

Falls der Zählerwert i gleich der Zahl Nₛ₀ ist, wird bei 87 eine Segmentlänge bestimmt. Dazu kann eine Differenz der bei 85 für unterschiedliche Federn registrierten Positionen berechnet werden. Falls i gleich Nₛ₀ ist, kann eine Differenz der für die Schweißnaht hinter der Nₛ₀-ten Feder registrierten Position des ersten Federförderers und der für die Schweißnaht vor der ersten Feder registrierten Position des ersten Federförderers bestimmt werden. Diese repräsentiert die Länge des Segments. Die Position des ersten Federförderers für die Schweißnaht vor der ersten Feder kann durch Extrapolation bestimmt werden.

Bei 88 wird eine Relativ-Fördergeschwindigkeit ermittelt, die zwischen der Fördergeschwindigkeit des zweiten Federförderers und der Fördergeschwindigkeit des ersten Federförderers eingestellt wird, während das entsprechende Segment der Federschlange von dem ersten Federförderer an den zweiten Federförderer ausgegeben wird. Die Relativ-Fördergeschwindigkeit wird abhängig von der bei 87 bestimmten Länge eingestellt. Die Relativ-Fördergeschwindigkeit kann als Geschwindigkeitsquotient festgelegt werden, der abhängig von dem Quotienten zwischen der bei 87 bestimmten Ist-Länge des Segments und einer Soll-Länge des Segments festgelegt wird. Die Relativ-Fördergeschwindigkeit kann verwendet werden, um den zweiten Federförderer entsprechend anzutreiben, wenn sowohl der erste als auch der zweite Federförderer die Federschlange fördert.

Bei 89 wird überprüft, ob eine weitere Feder erfasst wird, die an dem Sensor vorbeigeführt wird. Das Erfassen der Feder erfolgt in Förderrichtung vor dem zweiten Federförderer. Das Erfassen der Feder kann an einem Einlaufbereich des ersten Federförderers erfolgen oder vor dem Einlaufbereich des ersten Federförderers erfolgen.

Falls bei 89 keine Feder erfasst wird, kehrt das Verfahren nach einer Wartezeit 90 zur Überprüfung 89 zurück. Dies wird wiederholt, bis eine Feder erfasst wird.

Falls bei 89 ermittelt wird, dass eine Feder erfasst wird, die an dem Sensor vorbeigeführt wird, wird bei 91 der Zähler i inkrementiert.

Bei 92 wird überprüft, ob die Gesamtanzahl N von Federn der Federschlange erreicht ist. Die Gesamtanzahl N kann benutzerdefiniert vorgegeben werden. Falls i nicht gleich N ist, kehrt das Verfahren zu 87 zurück. Die Ermittlung der Soll-Länge wird nun für das neue Segment, das die erste bis (Nₛ₀+k)-te Feder beinhaltet, wiederholt. Dabei ist k eine ganze positive Zahl. Entsprechend wird die Ermittlung und Einstellung der Relativ-Fördergeschwindigkeit wiederholt. So kann die beim ersten Durchgang bei 88 ermittelte Relativ-Fördergeschwindigkeit noch nachjustiert werden.

Falls die Gesamtanzahl N von Federn der Federschlange erreicht ist, werden bei 93 der ersten Federförderer und der zweite Federförderer synchron gestoppt.

Bei 94 wird das Taschenmaterial hinter der N-ten Feder durchtrennt und verschweißt.

Bei 95 werden der erste Federförderer und der zweite Federförderer synchron gestartet. Die Geschwindigkeiten werden dabei abhängig von einem Vergleich der Ist-Länge mit der Soll-Länge eines der vorher vermessenen Segmente der Federschlange eingestellt. Insbesondere kann ein Geschwindigkeitsquotient zwischen der Fördergeschwindigkeit des zweiten Federförderers und der Fördergeschwindigkeit des ersten Federförderers abhängig von einem Quotienten zwischen Ist-Länge und Soll-Länge des entsprechenden Segments gesetzt werden.

Die Einstellung von neuen Relativ-Fördergeschwindigkeiten gemäß Schritt 88 kann auch nach dem Starten bei 95 fortgesetzt werden, bis die gesamte Federschlange an den zweiten Federförderer überführt ist.

Das Verfahren 80 kann anschließend für die nachfolgende Federschlange wiederholt werden.

Das Verfahren 80 kann weitere Schritte beinhalten. Beispielsweise können Kontrollfunktionen integriert werden, um zu überprüfen, ob eine Feder fehlt oder eine Schweißung zwischen eingetaschten Federn nicht ordnungsgemäß angebracht ist. Im Fehlerfall kann der Betrieb der Vorrichtung gestoppt und ein Warnsignal ausgegeben werden.

Bei dem Verfahren 80 von Fig. 9 werden Längen von überlappenden Segmenten bestimmt. Die Relativ-Fördergeschwindigkeit wird mit zunehmender Anzahl von Federn in dem Segment entsprechend nachjustiert, so dass nacheinander unterschiedliche Relativ-Fördergeschwindigkeiten eingestellt werden.

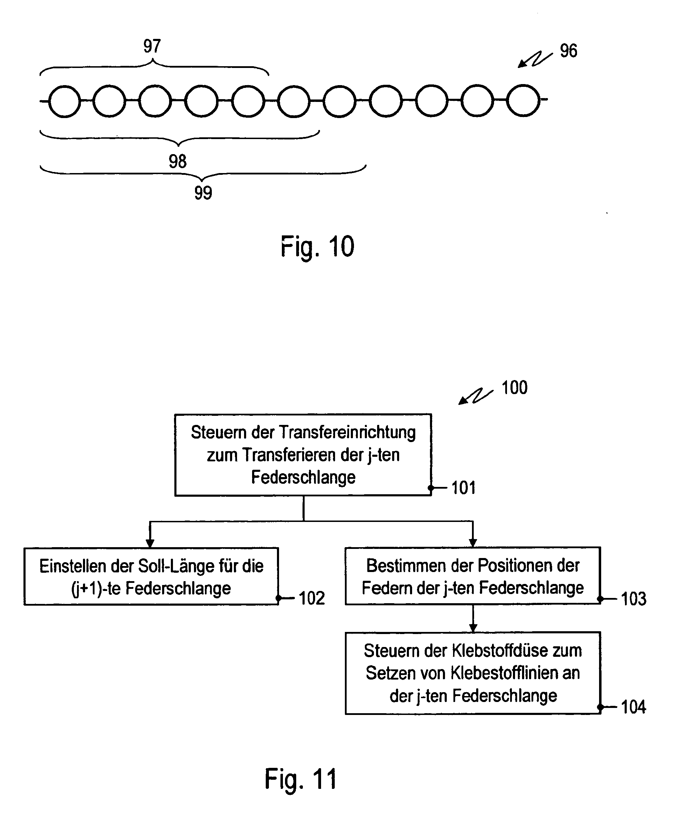

Fig. 10 zeigt eine Federschlange 96. Mit dem Verfahren 80 werden Ist-Längen von Segmenten 97-99 ermittelt. Die Relativ-Fördergeschwindigkeit wird entsprechend einem Ist-/Soll-Vergleich für die Segmente 97-99 eingestellt.

Die Steuereinrichtung 9 kann parallel zur Einstellung einer Soll-Länge der Federschlange gemäß dem Verfahren 80 weitere Funktionen durchführen. Dies wird anhand von Fig. 11 erläutert.

Fig. 11 ist eine schematische Flussdiagrammdarstellung eines Verfahrens 100, das von der Steuereinrichtung 9 durchgeführt werden kann. Der Index j bezeichnet dabei eine Federschlange.

Bei 101 wird eine Transfereinrichtung gesteuert, um die j-te Federschlange von dem zweiten Federförderer zu der Federkern-Montageeinrichtung zu transferieren.

Bei 102 wird eine Soll-Länge für die nachfolgende, (j+1)-te Federschlange eingestellt. Dies kann unter Verwendung des Verfahrens 80 von Fig. 9 erfolgen.

Parallel dazu werden bei 103 rechnerisch die Positionen entlang der Förderrichtung bestimmt, an denen die Federn der j-ten Federschlange in ihrer Endstellung am zweiten Federförderer angeordnet waren. Die Bestimmung der Positionen kann abhängig von den bei dem Verfahren 80 bei 85 registrierten Positionen des ersten Federförderers und der eingestellten Relativ-Fördergeschwindigkeiten durchgeführt werden.

Bei 104 wird eine Klebstoffdüse zum Aufbringen von Klebstoff auf die j-te Federschlange abhängig von den bei 103 bestimmten Positionen gesteuert. Dabei kann ein Öffnungszustand der Klebstoffdüse mit Ein-/Aus-Signalen gesteuert werden, während die Klebstoffdüse mit konstanter Geschwindigkeit an der Federschlange vorbeigeführt wird. Auf diese Weise werden mit guter Genauigkeit Klebstofflinien oder Klebstoffpunkte an der j-ten Federschlange angebracht, die ein Verkleben mit der (j+1)-ten Federschlange erlauben.

Das Verfahren 100 kann wiederholt werden, bis der Taschenfederkern vollständig aus mehreren Federschlangen zusammengefügt ist.

Bei den Vorrichtungen und Verfahren können verschiedene Parameter, wie die Gesamtanzahl von Federn in einer Federschlange, die Anzahl von Federn in einem Segment, die Soll-Länge von Segmenten oder die Soll-Länge der gesamten Federschlange benutzerdefiniert vorgebbar sein. Dies kann durch eine entsprechende Programmierung der Steuereinrichtung 9 erreicht werden.

Fig. 13 ist eine schematische Perspektivansicht eines ersten Federförderers 3. Ein erster Federförderer 3 mit der nun beschriebenen Ausgestaltung kann als erster Federförderer bei der Vorrichtung von Fig. 1-6 eingesetzt werden.

Der erste Federförderer 3 weist ein Paar von Fördereinrichtung 111 und 112 auf. Die Fördereinrichtungen 111 und 112 sind senkrecht zur Förderrichtung voneinander beabstandet, so dass ein Spalt 113 zwischen den Fördereinrichtungen 111 und 112 gebildet ist. Die Fördereinrichtungen 111 und 112 können jeweils als umlaufendes Förderband ausgebildet sein. Die Fördereinrichtungen 111 und 112 sind in einer Richtung quer zur Längsachse der Federn voneinander beabstandet.

Der Spalt 113 ist so bemessen, dass das Eingriffselement 12 der Überführungseinrichtung in den Spalt 113 einfahren kann. Dadurch wird eine schlupfarme Überführung von Federn erleichtert.

Der erste Federförderer 3 weist ein weiteres Paar von Fördereinrichtung 116 und 117 auf. Das weitere Paar von Fördereinrichtung 116 und 117 ist von dem Paar mit den Fördereinrichtungen 111 und 112 in einer Richtung senkrecht zur Förderrichtung beabstandet. Das Paar mit den Fördereinrichtung 116 und 117 und das Paar mit den Fördereinrichtungen 111 und 112 können in vertikaler Richtung voneinander beabstandet sein. Die Fördereinrichtungen 116 und 117 des weiteren Paars können in horizontaler Richtung voneinander beabstandet sein.

Die Fördereinrichtungen 116 und 117 sind senkrecht zur Förderrichtung voneinander beabstandet, so dass ein Spalt 118 zwischen den Fördereinrichtungen 116 und 117 gebildet ist. Die Fördereinrichtungen 116 und 117 können jeweils als umlaufendes Förderband ausgebildet sein. Die Fördereinrichtungen 116 und 117 sind in einer Richtung senkrecht zur Längsachse der Federn, d.h. in einer horizontalen Richtung, voneinander beabstandet.

Der Spalt 118 ist so bemessen, dass das Eingriffselement 11 der Überführungseinrichtung in den Spalt 118 einfahren kann. Dadurch wird eine schlupfarme Überführung von Federn erleichtert.

Unabhängig davon, ob obere und untere Förderbänder des ersten Federförderers zweigeteilt sind oder nicht, können separate Antriebe 16a und 16b für das untere Förderband (bzw. die unteren Förderbänder) und das obere Förderband (bzw. die oberen Förderbänder) vorgesehen sein. Beispielsweise kann der Antrieb 16a die Förderbänder 111 und 112 antreiben. Der Antrieb 16b kann die Förderbänder 116 und 117 antreiben. Falls nur ein oberes und ein unteres Förderband vorgesehen ist, kann der Antrieb 16a das untere Förderband antreiben, und der Antrieb 16b kann das obere Förderband antreiben.

Der Antrieb 16a und der Antrieb 16b kann jeweils als ein Stellantrieb ausgestaltet sein.

Ähnlich kann auch der zweite Federförderer 4 einen separaten Antrieb 17a für ein unteres Förderband und einen separaten Antrieb 17b für ein oberes Förderband aufweisen. Die Antriebe 17a und 17b können mit der Steuerung 9 verbunden sein. Die Steuerung 9 kann den Vorschub des unteren Förderbands und des oberen Förderbands unabhängig voneinander kontrollieren. Der Antrieb 17a und der Antrieb 17b kann jeweils als ein Stellantrieb ausgestaltet sein.

Wenn untere und obere Förderbänder des ersten Federförderers 3 und/oder ein unteres und ein oberes Förderband des zweiten Federförderers 4 unabhängig voneinander angetrieben werden können, kann im ersten Federförderer eine Verkippung von Federn detektiert werden. Die Verkippung kann von der Vorrichtung zum Fördern der Federschlange korrigiert werden.

Zum Detektieren einer derartigen Verkippung können die Sensoren 5 und 5' so angeordnet sein, dass sie in einer ersten Richtung und einer zweiten Richtung, die beide senkrecht zur Förderrichtung sind, gegeneinander versetzt sind. Die Sensoren 5 und 5' sind an entgegengesetzten Seiten des ersten Federförderers 3 angeordnet. Darüber hinaus sind die Sensoren 5 und 5' in unterschiedlichen Höhen relativ zu dem unteren Förderband 111 bzw. 112 angeordnet. Eine derartige Anordnung erlaubt, eine Verkippung von Federn der Federschlange zu detektieren.

Eine Korrektur der Verkippung kann beispielsweise im zweiten Federförderer 4 erfolgen. Dazu können die separaten Antriebe 17a und 17b von der Steuerung 9 so kontrolliert werden, dass die Verkippung in einer Schlussbewegung korrigiert wird. Bei der Bestimmung der Schlussbewegung kann die Steuerung 9 berücksichtigen, mit welchen Relativ-Fördergeschwindigkeiten zuvor der erste Federförderer 3 und der zweite Federförderer 4 die Federn vorgeschoben haben.

Fig. 13 ist eine schematische Darstellung einer eingetaschten Feder 120. Die Feder 120 wird von dem ersten Federförderer 3 gefördert. Die Längsachse der Feder 120 ist jedoch nicht senkrecht zur Förderrichtung. Um eine derartige Verkippung zu korrigieren, kann die Steuereinrichtung 9 so ausgestaltet sein, dass sie die Stellantriebe 16a und 16b unabhängig voneinander steuert. Dabei kann der Vorschub der oberen und unteren Förderbänder so eingestellt werden, dass am Ende des ersten Federförderers, d.h. bei der Übergabe an den zweiten Federförderer, die Längsachse der Feder 120 senkrecht zur Förderrichtung ist.

Vorrichtungen und Verfahren zum Fördern von Federn zu einer Federkern-Montageeinrichtung nach verschiedenen Ausführungsbeispielen wurden unter Bezugnahme auf die Figuren beschrieben. Abwandlungen der detailliert beschriebenen Ausführungsbeispiele können bei weiteren Ausführungsbeispielen realisiert sein.

Während im Kontext von Ausführungsbeispielen eine segmentweise Anpassung von Relativ-Fördergeschwindigkeiten zum Ausgleichen von unerwünschten Abweichungen von Segmentlängen beschrieben wurden, können die Vorrichtungen und Verfahren auch eingesetzt werden, um gezielt Segmente mit unterschiedlicher Federndichte zur erzeugen.

Im Kontext von Ausführungsbeispielen wurden Federförderer beschrieben, die zwei umlaufende, beabstandete Förderbänder aufweisen. Eine derartige Ausgestaltung erlaubt eine einfache Anpassung an unterschiedliche Federhöhen. Andere Ausgestaltungen der Federförderer können jedoch ebenfalls eingesetzt werden.

Im Kontext von Ausführungsbeispielen wurden Federförderer beschrieben, bei denen die Federn mit vertikal gerichtet Längsachsen transportiert und anschließend in dieser Orientierung zum Taschenfederkern montiert werden. Bei weiteren Ausgestaltungen können der erste und zweite Federförderer so ausgestaltet sein, dass sie die Federn mit einer horizontalen Ausrichtung ihrer Längsachsen fördern. Der zweite Federförderer kann um die Förderrichtung um 90° schwenkbar sein, bevor die Federschlange zur Federkern-Montageeinrichtung transferiert wird.

Die Vorrichtungen und Verfahren nach verschiedenen Ausführungsbeispielen der Erfindung erlauben es, eine Anpassung einer Länge einer Federschlange vorzunehmen, wobei die dafür erforderlichen Bauraumerfordernisse im Vergleich zu herkömmlichen Lösungen moderat gehalten werden können. Die Vorrichtungen und Verfahren können allgemein zum Fördern von Taschenfederschlangen eingesetzt werden.

## Patentansprüche

1. Vorrichtung zum Fördern einer Federschlange (31; 58; 96), die eine Mehrzahl von miteinander verbundenen eingetaschten Federn aufweist, wobei die Vorrichtung (1) umfasst:
einen ersten Federförderer (3) und einen zweiten Federförderer (4), wobei der erste Federförderer (3) eingerichtet ist, um die Federschlange (31; 58; 96) zu dem zweiten Federförderer (4) zu fördern,
eine Sensoreinrichtung, die eingerichtet ist, um beim Fördern der Federschlange (31; 58; 96) vorbei an einem in Förderrichtung vor dem zweiten Federförderer (4) angeordneten Sensor (5; 5, 5', 6, 6') der Sensoreinrichtung Längen mehrerer Segmente (33, 34; 97-99) der Federschlange (31; 58; 96) zu erfassen, und
eine Steuereinrichtung (9), die mit der Sensoreinrichtung gekoppelt ist, und die mit einem Antrieb (16; 16a, 16b) des ersten Federförderers (3) und/oder einem Antrieb (19) des zweiten Federförderers (4) gekoppelt ist, und die eingerichtet ist, um in einem Betriebszustand der Vorrichtung (1), in dem sowohl der erste Federförderer (3) als auch der zweite Federförderer (4) die Federschlange (31; 58; 96) fördert, abhängig von den erfassten Längen zeitsequentiell mehrere Relativ-Fördergeschwindigkeiten zwischen einer Fördergeschwindigkeit (24, 25) des zweiten Federförderers (4) und einer Fördergeschwindigkeit (22) des ersten Federförderers (3) einzustellen.

2. Vorrichtung nach Anspruch 1,
wobei die Sensoreinrichtung eingerichtet ist, um die Längen der mehreren Segmente (97-99) zu erfassen, wobei die mehreren Segmente (97-99) miteinander überlappen und unterschiedliche Segmente (97-99) eine unterschiedliche Anzahl von Federn aufweisen,
wobei die Steuereinrichtung (9) eingerichtet ist, um zum Einstellen der mehreren Relativ-Fördergeschwindigkeiten eine anfangs eingestellte Relativ-Fördergeschwindigkeit abhängig von den erfassten Längen anzupassen.

3. Vorrichtung nach Anspruch 1 oder 2,
wobei die Steuereinrichtung (9) eingerichtet ist, um abhängig von den eingestellten Relativ-Fördergeschwindigkeiten rechnerisch Positionen von mehreren Federn der Federschlange (31; 58; 96) an dem zweiten Federförderer (4) zu ermitteln.

4. Vorrichtung nach einem der vorhergehenden Ansprüche, weiterhin umfassend:
eine Abtrenneinrichtung (41, 41', 42) zum Abtrennen der Federschlange (31; 58; 96) von einer Endlos-Federschlange,
wobei die Steuereinrichtung (9) mit der Abtrenneinrichtung (41, 41', 42) gekoppelt und eingerichtet ist, um wenigstens eine der mehreren Relativ-Fördergeschwindigkeiten vor Ansteuerung der Abtrenneinrichtung (41, 41', 42) zum Abtrennen der Federschlange (31; 58; 96) einzustellen.

5. Vorrichtung nach einem der vorhergehenden Ansprüche, weiterhin umfassend:
eine Überführungseinrichtung (2) zum Überführen der Federschlange (31; 58; 96) zu dem ersten Federförderer (3), die in der Förderrichtung bewegbar gelagert ist und die abhängig von einem Steuersignal der Steuereinrichtung (9) aus einem Haltezustand zum Halten der Federschlange (31; 58; 96) in einen Freigabezustand zum Freigeben der Federschlange (31; 58; 96) überführbar ist,
wobei die Steuereinrichtung (9) eingerichtet ist, um das Steuersignal selektiv dann zu erzeugen, wenn eine Differenz zwischen der Fördergeschwindigkeit (22) des ersten Federförderers (3) und einer Bewegungsgeschwindigkeit (21) der Überführungseinrichtung (2) in der Förderrichtung einen Betrag aufweist, der kleiner als ein vorgegebener Schwellenwert ist.

6. Vorrichtung nach Anspruch 5,
wobei der erste Federförderer (3) wenigstens zwei quer zur Förderrichtung voneinander beabstandete Fördereinrichtungen (111, 112, 116, 117) aufweist, wobei die Überführungseinrichtung (2) ausgestaltet und angeordnet ist, um in einen Spalt (113, 118) zwischen den quer zur Förderrichtung beabstandeten Fördereinrichtungen (111, 112, 116, 117) einzufahren.

7. Vorrichtung nach Anspruch 5 oder Anspruch 6,
wobei die Sensoreinrichtung einen in Förderrichtung vor dem ersten Federförderer (3) angeordneten weiteren Sensor (6, 6') zum Erfassen der Längen der mehreren Segmente (33, 34; 97-99) umfasst, und
wobei die Steuereinrichtung (9) eingerichtet ist, um die mehreren Relativ-Fördergeschwindigkeiten weiterhin abhängig von einem Ausgangssignal des weiteren Sensors (6, 6') einzustellen.

8. Vorrichtung nach einem der vorhergehenden Ansprüche,
wobei eine Länge des ersten Federförderers (3) kleiner als eine Länge der Federschlange (31; 58; 96) an dem ersten Federförderer (3) ist.

9. Vorrichtung nach einem der vorhergehenden Ansprüche,
wobei der erste Federförderer (3) einen Stellantrieb (16; 16a, 16b) aufweist und die Steuereinrichtung (9) eingerichtet ist, um zum Ermitteln der Längen abhängig von einem Ausgangssignal des Sensors (5; 5, 5', 6, 6') Stellungen des Stellantriebs (16; 16a, 16b) abzufragen.

10. Vorrichtung nach einem der vorhergehenden Ansprüche,
wobei die Sensoreinrichtung wenigstens zwei in einer Richtung quer zur Förderrichtung beabstandete Sensoren (5, 5') aufweist, um eine Verkippung einer Feder (120) zu detektieren,
wobei der erste Federförderer (3) und/oder der zweite Federförderer (4) wenigstens zwei Stellantriebe (16a, 16b; 17a, 17b) aufweist, und
wobei die Steuereinrichtung (9) eingerichtet ist, um die wenigstens zwei Stellantriebe (16a, 16b; 17a, 17b) abhängig von einer von der Sensoreinrichtung detektierten Verkippung der Feder (120) zu steuern.

11. Anlage zum Herstellen eines Taschenfederkerns, umfassend eine Vorrichtung (1) zum Fördern einer Federschlange (31; 58; 96) nach einem der Ansprüche 1-10 und
eine Federkern-Montageeinrichtung (51), die eingerichtet ist, um mehrere von der Vorrichtung (1) geförderte Federschlangen (31; 57-59) zu einem Taschenfederkern zusammenzufügen.

12. Anlage nach Anspruch 11,
wobei die Vorrichtung (1) zum Fördern als Vorrichtung nach Anspruch 3 ausgebildet ist, und
wobei die Steuereinrichtung (9) eingerichtet ist, um die Federkern-Montageeinrichtung (51) abhängig von den ermittelten Positionen von mehreren Federn der Federschlange (31; 58; 96) an dem zweiten Federförderer (4) zu steuern.

13. Anlage nach Anspruch 12,
wobei die Federkern-Montageeinrichtung (51) eine Aufbringeinrichtung (52) zum Aufbringen von Klebstoff umfasst,
wobei die Steuereinrichtung (9) eingerichtet ist, um eine Klebstoffabgabe der Aufbringeinrichtung (52) als Funktion der Zeit abhängig von den ermittelten Positionen von mehreren Federn der Federschlange (31; 58; 96) an dem zweiten Federförderer (4) zu steuern.

14. Verfahren zum Fördern einer Federschlange (31; 58; 96), die eine Mehrzahl von miteinander verbundenen eingetaschten Federn aufweist, zu einer Federkern-Montageeinrichtung (51),
wobei die Federschlange (31; 58; 96) mit einem ersten Federförderer (3) und mit einem diesem in Förderrichtung nachgeordneten zweiten Federförderer (4) gefördert wird,
wobei Längen mehrerer Segmente (33, 34; 97-99) der Federschlange (31; 58; 96) jeweils erfasst werden, bevor das entsprechende Segment (33, 34; 97-99) vollständig an dem zweiten Federförderer (4) positioniert ist, und
wobei abhängig von den erfassten Längen zeitsequentiell mehrere Relativ-Fördergeschwindigkeiten zwischen einer Fördergeschwindigkeit (24, 25) des zweiten Federförderers (4) und einer Fördergeschwindigkeit (22) des ersten Federförderers (3) eingestellt werden, während sowohl der erste Federförderer (3) als auch der zweite Federförderer (4) die Federschlange (31; 58; 96) fördert.

15. Verfahren nach Anspruch 14,
wobei das Verfahren von der Vorrichtung (1) nach einem der Ansprüche 1-10 ausgeführt wird.

## Claims

1. An apparatus for conveying a string of springs (31; 58; 96) which comprises a plurality of pocketed springs connected to each other, the apparatus (1) comprising:
a first spring conveyer (3) and a second spring conveyer (4), wherein the first spring conveyer (3) is configured to convey the string of springs (31; 58; 96) to the second spring conveyer (4),
a sensor device which is configured to detect lengths of plural segments (33, 34; 97-99) of the string of springs (31; 58; 96) when the string of springs (31; 58; 96) is conveyed past a sensor (5; 5, 5', 6, 6') of the sensor device which is arranged upstream, in a conveying direction, of the second spring conveyer (4), and
a control device (9) which is coupled to the sensor device and which is coupled to a drive mechanism (16; 16a, 16b) of the first spring conveyer (3) and/or to a drive mechanism (19) of the second spring conveyer (4), and which is configured to set plural relative conveying speeds between a conveying speed (24, 25) of the second spring conveyer (4) and a conveying speed (22) of the first spring conveyer (3) in a time-sequential manner in an operating state of the apparatus (1) in which both the first spring conveyer (3) and the second spring conveyer (4) convey the string of springs (31; 58; 96).

2. The apparatus according to claim 1,
wherein the sensor device is configured to detect the lengths of the plural segments (97-99), with the plural segments (97-99) overlapping with each other and with different segments (97-99) having different numbers of springs,
wherein the control device (9) is configured to adjust an initially set relative conveying speed as a function of the detected lengths to set the plural relative conveying speeds.

3. The apparatus according to claim 1 or claim 2, wherein the control device (9) is configured to compute positions of plural springs of the string of springs (31; 58; 96) on the second spring conveyer (4) as a function of the set relative conveying speeds.

4. The apparatus according to any one of the preceding claims, further comprising:
a separating device (41, 41', 42) for separating the string of springs (31; 58; 96) from an endless string of springs,
wherein the control device (9) is coupled to the separating device (41, 41', 42) and is configured to set at least one of the plural relative conveying speeds before controlling the separating device (41, 41', 42) for separating the string of springs (31; 58; 96).

5. The apparatus according to any one of the preceding claims, further comprising:
a transfer device (2) for transferring the string of springs (31; 58; 96) to the first spring conveyer (3), the transfer device being supported movably in the conveying direction and being configured to be transferred from a holding state for holding the string of springs (31; 58; 96) to a release state for releasing the string of springs (31; 58; 96) based on a control signal of the control device (9),
wherein the control device (9) is configured to generate the control signal selectively when a difference between the conveying speed (22) of the first spring conveyer (3) and a motion speed (21) of the transfer device (2) in the conveying direction has a modulus which is less than a predetermined threshold.

6. The apparatus according to claim 5,
wherein the first spring conveyer (3) comprises at least two conveying devices (111, 112, 116, 117) which are spaced from each other transverse to the conveying direction, wherein the transfer device (2) is configured and arranged to enter a gap (113, 118) between the conveying devices (111, 112, 116, 117) which are spaced transverse to the conveying direction.

7. The apparatus according to claim 5 or claim 6, wherein the sensor device comprises a further sensor (6, 6') arranged upstream of the first spring conveyer (3) in the conveying direction for detecting the lengths of the plural segments (33, 34; 97-99), and
wherein the control device (9) is configured to set the plural relative conveying speeds further as a function of an output signal of the further sensor (6, 6').

8. The apparatus according to any one of the preceding claims,
wherein a length of the first spring conveyer (3) is less than a length of the string of springs (31; 58; 96) at the first spring conveyer (3).

9. The apparatus according to any one of the preceding claims,
wherein the first spring conveyer (3) has a servo drive (16; 16a, 16b), and wherein the control device (9) is configured to sample positions of the servo drive (16; 16a, 16b) to detect the lengths as a function of an output signal of the sensor (5; 5, 5', 6, 6').

10. The apparatus according to any one of the preceding claims,
wherein the sensor device has at least two sensors (5, 5') which are spaced in a direction transverse to the conveying direction to detect a tilt of a spring (120),
wherein the first spring conveyer (3) and/or the second spring conveyer (4) comprises at least two servo drives (16a, 16b; 17a, 17b), and
wherein the control device (9) is configured to control the at least two servo drives (16a, 16b; 17a, 17b) as a function of a tilt of the spring (120) detected by the sensor device.

11. A system for producing a pocket spring core, comprising
an apparatus (1) for conveying a string of springs (31; 58; 96) according to any one of claims 1-10, and
a spring core assembly device (51) which is configured to combine plural strings of springs (31; 57-59) conveyed by the apparatus (1) to a pocket spring core.

12. The system according to claim 11,
wherein the apparatus (1) for conveying is configured as the apparatus according to claim 3, and
wherein the control device (9) is configured to control the spring core assembly device (51) as a function of the detected positions of plural springs of the string of springs (31; 58; 96) on the second spring conveyer (4).

13. The system according to claim 12,
wherein the spring core assembly device (51) comprises an application device (52) for applying glue,
wherein the control device (9) is configured to control a discharge of glue by the application device (52) in a time-dependent manner as a function of the determined positions of the plural springs of the string of springs (31; 58; 96) on the second spring conveyer (4).

14. A method for conveying a string of springs (31; 58; 96) which comprises a plurality of pocketed springs connected to each other to a spring core assembly device (51),
wherein the string of springs (31; 58; 96) is conveyed by a first spring conveyer (3) and a second spring conveyer (4) which is arranged downstream thereof in a conveying direction,
wherein lengths of plural segments (33, 34; 97-99) of the string of springs (31; 58; 96) are respectively detected before the respective segment (33, 34; 97-99) is completely positioned at the second spring conveyer (4), and
wherein plural relative conveying speeds between a conveying speed (24, 25) of the second spring conveyer (4) and a conveying speed (22) of the first spring conveyer (3) are set time-sequentially as a function of the detected lengths while both the first spring conveyer (3) and the second spring conveyer (4) conveys the string of springs (31; 58; 96).

15. The method according to claim 14,
wherein the method is performed by the apparatus (1) according to any one of claims 1-10.

## Revendications

1. Système pour le convoyage d'une file de ressorts (31 ; 58 ; 96) comprenant une pluralité de ressorts ensachés reliés les uns aux autres, ledit système (1) comprenant :
un premier convoyeur de ressorts (3) et un deuxième convoyeur de ressorts (4), le premier convoyeur de ressorts (3) étant prévu pour transporter la file de ressorts (31 ; 58 ; 96) vers le deuxième convoyeur de ressorts (4),
un dispositif détecteur, prévu pour déterminer les longueurs de plusieurs segments (33, 34 ; 97-99) de la file de ressorts (31 ; 58 ; 96) lors du passage de la file de ressorts (31 ; 58 ; 96) devant un capteur (5 ; 5, 5', 6, 6') du dispositif détecteur disposé en amont du deuxième convoyeur de ressorts (4) dans la direction de transport, et
un dispositif de commande (9) couplé au dispositif détecteur, et couplé à un entraînement (16 ; 16a, 16b) du premier convoyeur de ressorts (3) et/ou à un entraînement (19) du deuxième convoyeur de ressorts (4), et qui est prévu pour régler séquentiellement en fonction des longueurs déterminées plusieurs vitesses de transport relatives entre une vitesse de transport (24, 25) du deuxième convoyeur de ressorts (4) et une vitesse de transport (22) du premier convoyeur de ressorts (3), dans un état de service du système (1) où le premier convoyeur de ressorts (3) ainsi que le deuxième convoyeur de ressorts (4) transportent la file de ressorts (31 ; 58 ; 96).

2. Système selon la revendication 1,
où le dispositif détecteur est prévu pour déterminer les longueurs de la pluralité de segments (97-99), les segments (97-99) de la pluralité se chevauchant les uns les autres et des segments (97-99) différents présentant un nombre différent de ressorts,
le dispositif de commande (9) étant prévu pour ajuster une vitesse de transport relative initialement réglée en fonction des longueurs déterminées, pour le réglage de la pluralité de vitesses de transport relatives.

3. Système selon la revendication 1 ou 2,
où le dispositif de commande (9) est prévu pour déterminer par calcul des positions de plusieurs ressorts de la file de ressorts (31 ; 58 ; 96) sur le deuxième convoyeur de ressorts (4) en fonction des vitesses de transport relatives réglées.

4. Système selon l'une des revendications précédentes, comprenant en outre :
un dispositif de séparation (41, 41', 42) pour la séparation de la file de ressorts (31 ; 58 ; 96) d'une file de ressorts sans fin,
le dispositif de commande (9) étant couplé au dispositif de séparation (41, 41', 42) et prévu pour régler au moins une des plusieurs vitesses de transport relatives avant commande du dispositif de séparation (41, 41', 42) pour la séparation de la file de ressorts (31 ; 58 ; 96).

5. Système selon l'une des revendications précédentes, comprenant en outre :
un dispositif de transfert (2) pour le transfert de la file de ressorts (31 ; 58 ; 96) au premier convoyeur de ressorts (3), monté de manière à être mobile dans la direction de transport et pouvant être passé d'un état de maintien pour la retenue de la file de ressorts (31 ; 58 ; 96) à un état de libération pour le dégagement de la file de ressorts (31 ; 58 ; 96) en fonction d'un signal de commande du dispositif de commande (9),
le dispositif de commande (9) étant prévu pour générer sélectivement le signal de commande si une différence entre la vitesse de transport (22) du premier convoyeur de ressorts (3) et une vitesse de déplacement (21) du dispositif de transfert (2) dans la direction de transport présente une valeur inférieure à une va leur seuil définie.

6. Système selon la revendication 5,
où le premier convoyeur de ressorts (3) comporte au moins deux dispositifs de transport (111, 112, 116, 117) espacés l'un de l'autre transversalement à la direction de transport, le dispositif de transfert (2) étant réalisé et disposé pour s'engager dans un interstice (113, 118) entre les dispositifs de transport (111, 112, 116, 117) espacés transversalement à la direction de transport.

7. Système selon la revendication 5 ou la revendication 6,
où le dispositif détecteur comprend un autre capteur (6, 6') pour la détermination des longueurs de la pluralité de segments (33, 34 ; 97-99), disposé en amont du premier convoyeur de ressorts (3) dans la direction de transport, et
où le dispositif de commande (9) est prévu pour régler en outre la pluralité de vitesses de transport relatives en fonction d'un signal de sortie de l'autre capteur (6, 6').

8. Système selon l'une des revendications précédentes,
où une longueur du premier convoyeur de ressorts (3) est inférieure à une longueur de la file de ressorts (31 ; 58 ; 96) sur le premier convoyeur de ressorts (3).

9. Système selon l'une des revendications précédentes,
où le premier convoyeur de ressorts (3) comporte un actionneur (16 ; 16a, 16b), et où le dispositif de commande (9) est prévu pour appeler des positions de l'actionneur (16 ; 16a, 16b) en fonction d'un signal de sortie du capteur (5 ; 5, 5', 6, 6') pour déterminer les longueurs.

10. Système selon l'une des revendications précédentes, où le dispositif détecteur comporte au moins deux capteurs (5, 5') espacés dans une direction transversale à la direction de transport, pour détecter un pivotement d'un ressort (120),
où le premier convoyeur de ressorts (3) et/ou le deuxième convoyeur de ressorts (4) comportent au moins deux actionneurs (16a, 16b ; 17a, 17b), et
où le dispositif de commande (9) est prévu pour commander les deux actionneurs (16a, 16b ; 17a, 17b) ou plus en fonction d'un pivotement du ressort (120) détecté par le dispositif détecteur.

11. Installation de fabrication d'une armature à ressorts ensachés, comprenant
un système (1) pour le convoyage d'une file de ressorts (31 ; 58 ; 96) selon l'une des revendications 1 à 10, et
un dispositif de montage (51) d'armature à ressorts, prévu pour assembler une pluralité de files de ressorts (31 ; 57-59) convoyées par le système (1) pour former une armature à ressorts.

12. Installation selon la revendication 11,
où le système (1) de convoyage est réalisé comme système selon la revendication 3, et
où le dispositif de commande (9) est prévu pour commander le dispositif de montage (51) d'armature à ressorts en fonction des positions déterminées d'une pluralité de ressorts de la file de ressorts (31 ; 58 ; 96) sur le deuxième convoyeur de ressorts (4).

13. Installation selon la revendication 12,
où le dispositif de montage (51) d'armature à ressorts comprend un dispositif applicateur (52) pour l'application de colle,
le dispositif de commande (9) étant prévu pour une commande temporelle d'une délivrance de colle du dispositif applicateur (52) en fonction des positions déterminées de plusieurs ressorts de la file de ressorts (31 ; 58 ; 96) sur le deuxième convoyeur de ressorts (4).

14. Procédé de convoyage d'une file de ressorts (31 ; 58 ; 96) comprenant une pluralité de ressorts ensachés reliés les uns aux autres, vers un dispositif de montage (51) d'armature à ressorts,
où la file de ressorts (31 ; 58 ; 96) est transportée par un premier convoyeur de ressorts (3) et par un deuxième convoyeur de ressorts (4) situé en aval du précédent dans la direction de transport,
où des longueurs de plusieurs segments (33, 34 ; 97-99) de la file de ressorts (31 ; 58 ; 96) sont respectivement déterminées avant positionnement intégral de chaque segment (33, 34 ; 97-99) sur le deuxième convoyeur de ressorts (4), et
où plusieurs vitesses de transport relatives entre une vitesse de transport (24, 25) du deuxième convoyeur de ressorts (4) et une vitesse de transport (22) du premier convoyeur de ressorts (3) sont réglées séquentiellement en fonction des longueurs, pendant que le premier convoyeur de ressorts (3) ainsi que le deuxième convoyeur de ressorts (4) transportent la file de ressorts (31 ; 58 ; 96).

15. Procédé selon la revendication 14,
où le procédé est exécuté par le système (1) selon l'une des revendications 1 à 10.
